(19) Europäisches Patentamt
European Patent Office
Office européen des brevets

(11) **EP 3 575 439 B1**

(12) **EUROPEAN PATENT SPECIFICATION**

(45) Date of publication and mention of the grant of the patent:
**25.10.2023 Bulletin 2023/43**

(21) Application number: **18745271.9**

(22) Date of filing: **26.01.2018**

(51) International Patent Classification (IPC):
**C25B 1/04** *(2021.01)*

(52) Cooperative Patent Classification (CPC):
**C25B 15/08; C25B 1/04; C25B 9/00; C25B 9/63; C25B 9/70; C25B 9/73; C25B 13/02;** Y02E 60/36; Y02P 20/133

(86) International application number:
**PCT/JP2018/002590**

(87) International publication number:
**WO 2018/139616 (02.08.2018 Gazette 2018/31)**

(54) **ELECTROLYTIC BATH, ELECTROLYSIS DEVICE, ELECTROLYSIS METHOD, AND METHOD FOR PRODUCING HYDROGEN**

ELEKTROLYTISCHES BAD, ELEKTROLYSEVORRICHTUNG, ELEKTROLYSEVERFAHREN UND VERFAHREN ZUR HERSTELLUNG VON WASSERSTOFF

BAIN ÉLECTROLYTIQUE, DISPOSITIF D'ÉLECTROLYSE, PROCÉDÉ D'ÉLECTROLYSE ET PROCÉDÉ DE PRODUCTION D'HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2017 JP 2017012548**
**26.01.2017 JP 2017012551**

(43) Date of publication of application:
**04.12.2019 Bulletin 2019/49**

(73) Proprietor: **Asahi Kasei Kabushiki Kaisha**
**Tokyo 100-0006 (JP)**

(72) Inventors:
• **HOTTA Shinya**
**Tokyo 100-0006 (JP)**
• **YOKOTA Masahisa**
**Tokyo 100-0006 (JP)**
• **FUJIMOTO Norikazu**
**Tokyo 100-0006 (JP)**
• **KOMURA Ryo**
**Tokyo 100-0006 (JP)**
• **UCHINO Yousuke**
**Tokyo 100-0006 (JP)**
• **SUZUKI Yusuke**
**Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
WO-A1-2013/191140     JP-A- S5 168 477
JP-A- 2006 087 987     JP-A- 2014 009 385
JP-A- 2016 094 650

• MILEWSKI, J. ET AL: "Modeling an alkaline electrolysis cell through reduced-order and loss estimate approaches", JOURNAL OF POWER SOURCES, vol. 269, 7 July 2014 (2014-07-07), pages 203-211, XP002797813,

**Description**

TECHNICAL FIELD

The present disclosure relates to an electrolyzer, an electrolyzer for alkaline water electrolysis, an electrolysis device, a water electrolysis method, and a hydrogen production method.

BACKGROUND

Electrolysis technique has been applied in industries since a long time ago, ranging from productions of caustic soda and chlorine by means of electrolysis of salt water, to productions of hypochlorous acid, productions of alkali ion water, and productions of ozonated water, for example. Until now, various techniques have been proposed for reducing capital costs, and increasing the electrolysis efficiency and the durability of apparatuses.

In recent years, techniques utilizing renewable energy, such as wind power generation and photovoltaic power generation, have attracted attention in order to address the issues including global warming due to greenhouse gases such as carbon dioxide, decrease of fossil fuel reserves, and so on.

The nature of renewable energy is that it is subject to very large fluctuation as its output depends on climatic conditions. It is thus not always possible to transport electric power obtained by electricity generation by renewable energy to the general electric power system, and there is concern about social influences such as imbalance of electricity supply and demand, destabilization of electric power system, and so on.

Therefore, research is being conducted to convert the electric power generated from renewable energy into a form suitable for storage and transportation for utilization. Specifically, study has been made on how to generate storable and transportable hydrogen by electrolysis of water using electric power generated from renewable energy, and to use hydrogen as an energy source or material.

Hydrogen is widely used industrially in the fields of, for example, petroleum refining, chemical synthesis, and metal refining, and in recent years it can be used in many scenes such as in hydrogen stations for fuel cell vehicles (FCVs), smart communities, and hydrogen power plants. Accordingly, there is high expectation for the development of technology to obtain, in particular, highly-pure hydrogen from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, large-scale availability, and inexpensiveness as compared to other water electrolysis devices.

However, for adaptation of alkaline water electrolysis as a means for storing and transporting energy, it is necessary to make it possible to conduct water electrolysis efficiently and in a stable manner using electric power with large fluctuation in output as described above. Accordingly, there has been a demand for solving issues of electrolysis cells and apparatuses for alkaline water electrolysis.

In order to address the issue of improving the electric power consumption rate for hydrogen production by suppressing the bath voltage in alkaline water electrolysis, it is known to be effective to use a structure in which the gap between the membrane and the electrodes is substantially eliminated, which is called a zero-gap structure, as the structure of the electrolytic cell (see US4530743B [PTL 1] and JPS59-173281A [PTL 2]). With the zero-gap structure, by rapidly escaping the generated gas through the pores of an electrode to the side opposite to the membrane side of the electrode, it is possible to reduce the distance between the electrodes while minimizing gas accumulation near the electrodes, thereby keeping bath voltage low. The zero-gap structure is very effective in suppressing bath voltage and is adopted in various electrolysis devices.

In the meantime, Detlef Stolten *et al.* reported that optimized selection of electrodes and membranes and optimizations of structures of electrolysis cells, for example, are crucial for efficient and stable alkaline water electrolysis (see NPL 1: Detlef Stolten *et al.* [NPL 1]). In addition, a number of researches have been conducted to deal with the above-identified issues of electrolysis cell for alkaline water electrolysis having zero-gap structures (see WO2013/191140 [PTL 3] and WO2014/178317 [PTL 4]).

JP 2014-009385 discloses an electrolytic tank for alkaline water electrolysis, the electrolytic tank being constituted by an electrolytic cell in which a plurality of electrolytic cells, each comprising an anode, a cathode, a separator separating the anode and the cathode, and an anode frame and a cathode frame that frame the separator, is stacked with ion exchange membranes sandwiched therebetween, wherein the ion exchange membranes contact the anodes and the cathodes to form a zero-gap structure, a plurality of anode-ribs and cathode-ribs, aligned in parallel to each other in anode chambers and cathode chambers defined by the separators, the anode frames and cathode frames, and the ion exchange membranes, are provided parallel to a given direction running along the separators, the length A of the anode chambers and the cathode chambers in the given direction is 1,200 mm (1,2 m), and the pitch C between the anode ribs and the cathode ribs is 125 mm (0.125 m).

JP S51 68477 discloses an electrolytic tank for alkaline water electrolysis, the electrolytic tank being constituted by a plurality of electrolytic tank units, each comprising an anode, a cathode, a separator separating the anode and the cathode, and an iron frame that frames the separator, being stacked with cation exchange membranes sandwiched therebetween, wherein a plurality of titanium plate ribs and iron plate ribs, aligned in parallel to each other in anode chambers and cathode chambers defined by the separators, the iron frames, and the cation exchange membranes, are provided parallel to a given direction running along the separators, the length A of the anode chambers and the cathode chambers in the given direction is 1,200 mm (1.2 m), the length B of the anode chambers in a direction perpendicular to the separators is 10 to 60 mm (0.01-0.06 m), and the length B of the cathode chambers in the direction perpendicular to the separators is 5 to 60 mm (0.005-0.06 m).

JP 2016-094650 discloses an electrolysis apparatus comprising a bipolar electrolytic tank, an electrolyte solution, a gas-liquid separation tank for separating the electrolyte solution and hydrogen and/or oxygen, and a water introduction pump for replenishing water.

CITATION LIST

Patent Literature

PTL 1: US4530743B
PTL 2: JPS59-173281A
PTL 3: WO2013/191140
PTL 4: WO2014/178317

Non-patent Literature

NPL 1: Detlef Stolten et al., Hydrogen Energy, in Hydrogen and fuel cells: fundamentals, technologies and applications, Wiley-VCH Verlag GmbH & Co. KGaA, Germany, 2010, pp. 254-257

SUMMARY

(Technical Problem)

It has been turned out that, however, conventional electrolysis cells as described above have difficulties in significantly enhancing current density provided to electrolysis devices and throughputs of electrolysis facilities, thereby reducing construction cost, and reducing footprint of electrolysis facilities.

In theory, a higher current density increases ohmic potential drop during electrolysis, which makes an increase in the electrolysis voltage inevitable. In alkaline water electrolysis by conventional electrolysis cells, when the current density is doubled or tripled, for example, the electrolysis voltage significantly increases and the energy conversion efficiency upon converting electricity into hydrogen significantly drops. The reduced energy conversion efficiency increases heat generated at electrodes, which increases the temperature of an electrolyte. In such a case, degradation of parts, such as membranes, in the electrolysis device accelerates, which may make long-term operations difficult or even continued operation is suspended due to boiling of the electrolyte. For the above-described reasons, conventional electrolysis devices are operated with a typical current density per electrolysis area of about 2 kA/m². Operations of electrolysis devices at such low current densities require, however, large-scale electrolysis facilities, which may result in increased construction costs and higher footprint.

An object of the present disclosure, therefore, is to increase the energy conversion efficiency and suppress an increase in the temperature of the electrolyte during alkaline water electrolysis employing an electrolyzer having a zero-gap structure.

(Solution to Problem)

In order to solve the above-described issues, we observed flows of gases and an electrolyte during alkaline water electrolysis, and found that the current densities correlated with backmixing of the electrolyte and gases in anode compartments and cathode compartments. Specifically, it was found that backmixing occurred more frequently with an increase in the current density, resulting in an increase in the ohmic potential drop. In addition, it was also found out that in such a situation, the temperature of the electrolyte increased significantly in electrolysis cells, creating local high-temperature spots in the electrolyte.

We then found that the adjusting the heights and the thicknesses of an anode compartment and a cathode compartment in an electrolysis cell in certain ranges and provision of flow rectifiers at a certain interval in the direction of the flows of the electrolyte and evolved gases suppressed the backmixing in an electrolyzer having a zero-gap structure. In other words, we found that controlling the flows of the electrolyte and hydrogen and oxygen gases in appropriate ranges suppressed an increase in the ohmic potential drop particularly when the current density was high, which enabled control of heat generated at electrodes to appropriate ranges, thereby completing the present disclosure. The invention is defined in the appended claims.

(Advantageous Effect)

In accordance with the present disclosure, in alkaline water electrolysis employing an electrolyzer having a zero-gap structure, the energy conversion efficiency is increased and an increase in the temperature of the electrolyte is suppressed.

BRIEF DESCRIPTION OF THE DRAWINGS

In the accompanying drawings:

FIG. 1 is a side view generally illustrating an example of a bipolar electrolytic cell for alkaline water electrolysis according to the present embodiment;
FIG. 2 is a side view illustrating the part enclosed in the rectangle in the broken line in FIG. 1 of a zero-gap structure in the example of the bipolar electrolyzer for alkaline water electrolysis of the present embodiment;
FIG. 3 is a plan view illustrating electrode compartment parts in the example of the bipolar electrolyzer for alkaline water electrolysis of the present embodiment;
FIG. 4 is a plan view illustrating an example of an inner header type bipolar electrolyzer for alkaline water electrolysis of the present embodiment;
FIG. 5 is a diagram illustrating a partial cross-section of the example of the bipolar electrolyzer for alkaline water electrolysis in FIG. 4, when cut on the plane along Line A-A;
FIG. 6 is a plan view illustrating an example of an outer header type bipolar electrolyzer for alkaline water electrolysis of the present embodiment;
FIG. 7 is a diagram illustrating a partial cross-section of the example of the bipolar electrolyzer for alkaline water electrolysis in FIG. 6, when cut on the plane along Line B-B;
FIG. 8 illustrates the outline of an electrolysis device for alkaline water electrolysis of the present embodiment;
FIG. 9 illustrates the outline of a model electrolyzer in Examples A, where (A) is a front view (left) and a side view (right) of the model electrolyzer, (B) is a perspective view of an acrylic plate in which electrode compartments in the model electrolyzer were formed, and (C) illustrates a zero-gap structure in the model electrolyzer; and
FIG. 10 is cross-sectional view illustrating a partial side view of the outer header type bipolar electrolyzer together with the flow of the electrolyte in Examples A.

DETAILED DESCRIPTION

The following provides a detailed description of an embodiment of this disclosure (hereinafter, referred to as the "present embodiment").

(Bipolar electrolyzer for alkaline water electrolysis)

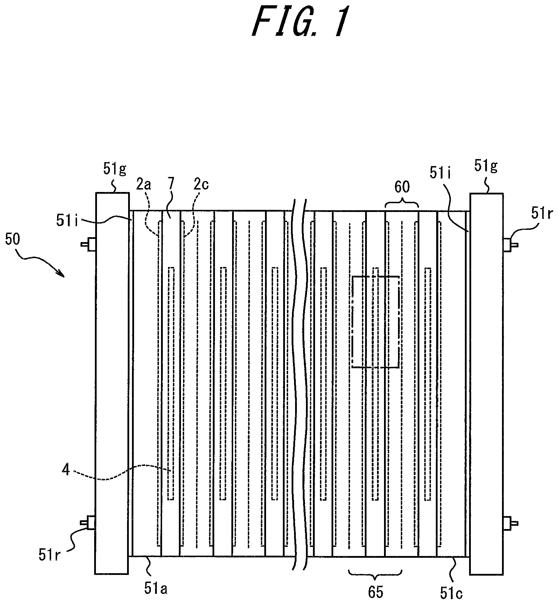

FIG. 1 is a side view generally illustrating an example of a bipolar electrolyzer for alkaline water electrolysis according to the present embodiment.

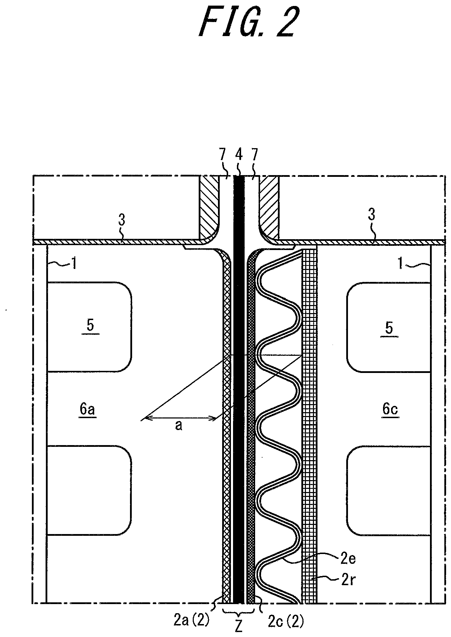

FIG. 2 is a side view illustrating the part enclosed in the rectangle in the broken line in FIG. 1 of a zero-gap structure in the example of the bipolar electrolyzer for alkaline water electrolysis of the present embodiment.

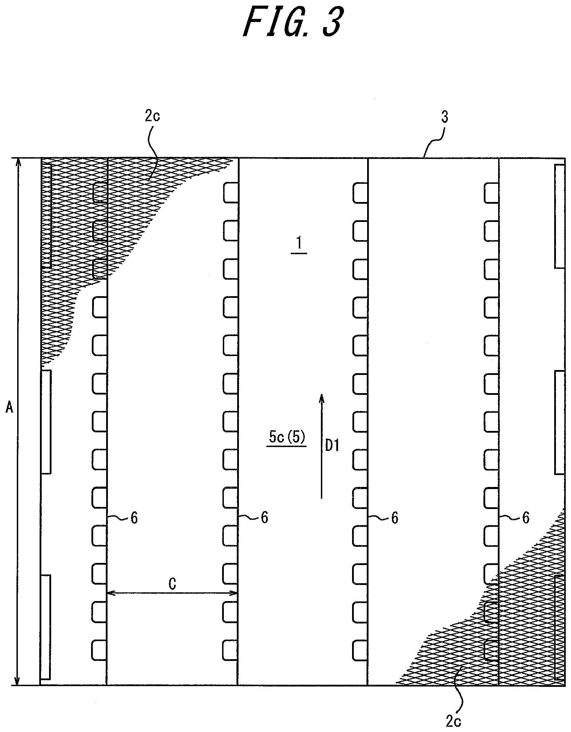

FIG. 3 is a plan view illustrating electrode compartment parts in the example of the bipolar electrolyzer for alkaline water electrolysis of the present embodiment.
As illustrated in FIG. 1, a bipolar electrolyzer for alkaline water electrolysis according to the present embodiment is a bipolar electrolyzer 50 comprising a plurality of bipolar elements 60 overlapped one another with a membrane 4 interposed therebetween, wherein each bipolar element 60 comprises an anode 2a, a cathode 2c, a partition wall 1 separating the anode 2a from the cathode 2c, and an outer frame 3 bordering the partition wall 1.
Further, in the bipolar electrolyzer 50 for alkaline water electrolysis of the present embodiment, the membrane 4 is in contact with the anode 2a and the cathode 2c, thereby forming a zero-gap structure Z (see FIG. 2).

Furthermore, in the bipolar electrolyzer 50 in the present embodiments, a partition wall 1, an outer frame 3, and a membrane 4 define an electrode compartment 5 that allows passage of an electrolyte, and a plurality of flow rectifiers 6 are provided so as to be parallel to a given direction D1 along the partition wall 1 in the electrode compartments 5 (see FIGS. 2 and 3). In other words, the plurality of flow rectifiers are arranged so as to be parallel to each other are provided in electrode compartments 5 so as to be parallel to the given direction D1 along the partition wall (see FIGS. 2 and 3).

(Electrolyzer)

The electrolyzer 50 for alkaline water electrolysis of the present embodiment may be either a monopolar or bipolar type, and is preferably a bipolar electrolyzer 50 in which bipolar elements 60 are stacked one another with a membrane 4 interposed therebetween.

A monopolar type is a method to connect one or more elements directly to a power source, and is parallel circuit in which a cathode terminal element 51c is provided to an anode 2a of each element comprising a cathode 2c and the anode 2a, having a membrane 4 interposed between the cathode terminal element 51c and the anode 2a, and an anode terminal element 51a is provided to the cathode 2c of each element, having a membrane 4 interposed between the anode terminal element 51a and the cathode 2c, and each terminal element is connected to the power source.

A bipolar type is one of methods to connect a number of cells to a power source, in which a plurality of bipolar elements 60 each having an anode 2a on one side and a cathode 2c on the other side, are arranged and are connected in series, and only the anode 2a and the cathode 2c at the two ends are connected to a power source.

The bipolar electrolyzer 50 is advantageous in that the current from the power source can be reduced, and therefore a large quantity of compounds or certain materials can be produced in shorter time in electrolysis. Bipolar electrolyzers are more preferred than monopolar types for industrial applications because constant-current and high-voltage power source facilities are less expensive and smaller for the same outputs.

((Element))

Examples of the elements as described above include monopolar elements employed in a monopolar electrolyzer and bipolar elements employed in a bipolar electrolyzer. Of these, bipolar elements are preferred.

A bipolar element 60 used in an example of the bipolar electrolyzer 50 for alkaline water electrolysis comprises an anode 2a, a cathode 2c, a partition wall 1 separating the anode 2a from the cathode 2c, and an outer frame 3 bordering the partition wall. More specifically, the partition wall 1 is conductive, and the outer frame 3 is provided surrounding the partition wall 1 along the outer circumference of the partition wall 1.

The element comprises the anode 2a, a cathode current collector 2r, a conductive elastic body 2e, and the cathode 2c, in this order, and may further comprise the partition wall 1, ribs 6, the outer frame 3, a reverse electricity absorption body, and an anode current collector, for example.

In the present embodiment, the bipolar element 60 may be used such that the given direction D1 along the partition wall 1 extends in the vertical direction. Specifically, when the partition wall 1 is rectangular in plan view as illustrated in FIGS. 2 and 3, the given direction D1 along the partition wall 1 extends in the same direction as the direction in which one pair of sides of two pairs of side facing each other extend (see FIGS. 1-7). In the present specification, this vertical direction is also referred to as the "electrolyte passage direction".

In the present embodiment, as illustrated in FIG. 1, the bipolar type electrolyzer 50 is constructed by stacking the required number of bipolar elements 60.

In the example of the bipolar electrolyzer 50 illustrated in FIG. 1, a fast head 51g, an insulating plate 51i, and an anode terminal element 51a are arranged in order from one end, and an anode-side gasket part 7, a membrane 4, a cathode side gasket part 7, and a bipolar element 60 are arranged side by side in this order. In this case, each bipolar element 60 is arranged such that the cathode 2c faces toward the anode terminal element 51a side. Components from anode-side gasket parts 7 up to bipolar elements 60 are repeatedly arranged as many times as required for the designed production quantity. After the required number of components from anode gasket part 7 up to bipolar elements 60 are repeatedly arranged, an anode-side gasket part 7, a membrane 7, and a cathode-side gasket part 7 are arranged again, and finally a cathode terminal element 51c, an insulating plate 51i, and a loose head 51g are arranged in this order. The entire bipolar electrolyzer 50 is tightened by tie rod mechanisms 51r (see FIG. 1) or a clamping mechanism, such as the one employing an oil-hydraulic cylinder, to provide a united structure as the bipolar electrolyzer 50.

The arrangement of the bipolar electrolyzer 50 can be arbitrarily selected from either the anode 2a side or the cathode 2c side and is not limited to the above order.

As illustrated in FIG. 1, in the bipolar electrolyzer 50, the bipolar elements 60 are disposed between the anode terminal element 51a and the cathode terminal element 51c. Respective membranes 4 are interposed between the anode terminal element 51a and the bipolar element 60, between two adjacent bipolar elements 60, and between the bipolar element 60 and the cathode terminal element 51c.

Furthermore, the bipolar electrolyzer of the present embodiment has preferably 50 or more and 500 or less, more preferably 70 or more and 300 or less, and even more preferably 100 or more and 200 or less of the above-described electrolysis cells.

Particularly in the case of outer header type electrolysis cells, when the number of electrolysis cells overlapped one another is 500 or less, the leak current reduces and the efficiency is increased. In addition, since the seal surface pressure is more likely to be equalized, the electrolyte or gases are less likely to leak. Furthermore, 50 or more electrolysis cells are capable of storing high electric power, which substantially provides further better performance as power storage system.

In the bipolar electrolyzer 50 for alkaline water electrolysis of the present embodiment, as illustrated in FIG. 2, the membrane 4 is in contact with the anode 2a and the cathode 2c, thereby forming zero-gap structures Z.

In alkaline water electrolysis, when there is a gap between a membrane 4 and an anode 2a and/or a cathode 2c, a large amount of bubbles generated by electrolysis accumulate in the gap along with the electrolyte, leading to a significant increase in electric resistance. In order to greatly reduce the electrolytic voltage in each electrolysis cell 65, it is effective to minimize the distance between the anode 2a and the cathode 2c (hereinafter also referred to as the "inter-electrode distance") to eliminate the influence of the electrolyte and bubbles present between the anode 2a and the cathode 2c.

The zero-gap structure Z can maintain a state in which the anode 2a and the membrane 4 are in contact with each other, and so are the cathode 2c and the membrane 4, over the entire surfaces of the electrodes 2, or a state in which the distance between the electrodes is substantially the same as the thickness of the membrane 4 such that there is almost no gap between the anode 2a and the membrane 4 and between the cathode 2c and the membrane 4 over the entire surfaces of the electrodes 2.

Several means for reducing inter-electrode distance have been proposed, and examples include one comprising flattening an anode 2a and a cathode 2c completely, and pressing them against each other having a membrane 4 sandwiched therebetween; one comprising disposing an elastic body (particularly, conductive elastic body 2e), such as a spring, between an electrode and a partition wall 1, thereby supporting the electrode 2 with the elastic body; and one comprising disposing an elastic body (particularly, conductive elastic body 2e) and a collector (particularly, the cathode collector 2r) between an electrode 2 and the partition wall 1, thereby supporting elastic body with the collector. In the example in FIG. 1, a method using an elastic body is employed.

In the electrolyzer for alkaline water electrolysis of the present disclosure, multiple elements each having an anode 2a and a cathode 2c are overlapped one another with a membrane 4 interposed therebetween, which is a porous membrane, such that a cathode 2c in one element and an anode 2a in an adjacent element face to each other. In addition, the electrolyzer also comprises a cathode complex including the cathode 2c and a conductive elastic body and a cathode current collector provided on a side of the cathode opposite to the membrane, and/or an anode complex including the anode 2a and a conductive elastic body and an anode current collector provided on the side of the anode opposite to the membrane.

In the bipolar electrolyzer 50 according to the present embodiment, as illustrated in FIGS. 2 and 3, a partition wall 1, an outer frame 3, and a membrane 4 define an electrode compartment 5 that allows passage of the electrolyte.

In particular, in the bipolar electrolyzer 50 according to the present embodiment, a section between the partition walls 1 of two adjacent bipolar elements 60 and a section between the partition wall 1 of a terminal element and the partition wall 1 of the adjacent bipolar element 60 are referred to as electrolytic cells 65. Each electrolytic cell 65 includes a partition wall 1, an anode compartment 5a, and an anode 2a of one element; a membrane 4; and a cathode 2c, a cathode compartment 5c, and a partition wall 1 of another element.

Specifically, each electrode compartment 5 includes an electrolyte inlet 5i for introducing the electrolyte to the electrode compartment 5, and an electrolyte outlet 5o for discharging the electrolyte from the electrode compartment, at a boundary to the outer frame 3. More specifically, each anode compartment 5a is provided with an anode electrolyte inlet 5ai for introducing the electrolyte to the anode compartment 5a, and an anode electrolyte outlet 5ao for discharging the electrolyte from the anode compartment 5a. Similarly, each cathode compartment 5c is provided with a cathode electrolyte inlet 5ci for introducing the electrolyte to the cathode compartment 5c, and a cathode electrolyte outlet 5co for discharging the electrolyte from the cathode compartment 5c.

In the example in FIGS. 1-3, the rectangular partition wall 1 and the rectangular membrane 4 are arranged so as to be parallel to each other, and the inner surface on the partition wall 1 side of a rectangular parallelepiped shaped outer frame 3, provided at an edge of the partition wall 1, is vertical to the partition wall 1. Therefore, each electrode compartment 5 has a rectangular parallelepiped shape.

The bipolar electrolyzer 50 typically has headers 10 (i.e., pipes 10) for dispensing or collecting an electrolyte, including an anode inlet header 10ai for introducing the electrolyte to an anode compartment 5a and a cathode inlet header 10ci for introducing the electrolyte to a cathode compartment 5c, at a lower portion of the outer frame 3 at the edge of the partition wall 1. Similarly, the bipolar electrolyzer 50 also has an anode outlet header 10ao for discharging the electrolyte from the anode compartment 5a and a cathode outlet header 10co for discharging the electrolyte from the cathode compartment 5c, at a upper portion of the outer frame 3 at the edge of the partition wall 1.

The headers 10 attached to the bipolar electrolyzer 50 illustrated in FIGS. 1-3 are typically disposed as internal headers 10I or external headers 100. In the present disclosure, however, no limitation is placed on the type of headers and either type may be used.

In the bipolar electrolyzer 50 of the present embodiment, the electrolyte dispensed via the anode inlet header 10ai enters the anode compartment 5a through the anode inlet header 10ai, passes through the anode compartment 5a, is discharged from the anode compartment 5a through the anode electrolyte outlet 5ao, and is collected in the anode outlet header 10ao.

The electrode compartments of the present embodiment are provided with multiple flow rectifiers 6 arranged so as to be parallel to the given direction D1 along an partition wall 1, as illustrated in FIGS. 2 and 3.

Each flow rectifier 6 reduces convections in the electrolysis compartments 5 caused by disturbances of flows of gases and liquid, thereby suppressing local temperature elevations of the electrolyte.

Particularly, in the example in FIGS. 1-3, the multiple flow rectifiers 6 are provided in the direction orthogonal to the given direction D1 along the partition wall 1 (the electrolyte passage direction in the illustrated example), at regular interval (pitch).

In addition, in the bipolar electrolyzer 50 of an example, a flow rectifier 6 has the length that are almost the same as the height of the electrode compartment 5, and are provided so as to be vertical to the partition wall 1. The flow rectifier 6 has, but is not essential, through-holes at a certain pitch in the given direction D1 along the partition wall 1 (the electrolyte passage direction in the illustrated example) for the purpose of reducing the weight of the electrolyzer.

Here, in the bipolar electrolyzer 50 for alkaline water electrolysis of the present embodiment, a length A of the electrode compartment 5 in the given direction along the partition wall is 0.40 m or more and 4.0 m or less, a length B of the electrode compartment 5 in the direction orthogonal to the partition wall 1 is 0.0030 m or more and 0.030 m or less, and an interval C between the multiple flow rectifiers 6 is 0.050 m or more and 0.10 m or less.

The length A may be defined to be indicative of the height of the electrode compartment 5, as illustrated in FIGS. 2 and 3, or may be the averaged length if the length in the given direction D1 along the partition wall 1 (electrolyte passage direction) varies in the electrode compartment 5. Alternatively, if the electrode compartment 5 is divided with respect to the given direction D1 along the partition wall 1, the length A may be the sum of the lengths of the divided sections corresponding to the length A.

The length B may be defined to be indicative of the thickness of the electrode compartment 5, as illustrated in FIG. 2, or may be the averaged length in the direction orthogonal to the electrode 2 if the length varies in the electrode compartment 5.

The interval C is defined to be indicative of the interval (pitch) if the multiple flow rectifiers 6 are provided at regular interval (pitch) (see FIG. 3), or is the averaged interval between the multiple flow rectifiers 6 if the multiple flow rectifiers 6 are provided not at regular interval (pitch). The interval C may be the averaged interval between two adjacent flow rectifiers 6 if the interval between two adjacent flow rectifiers 6 varies in the direction in which the flow rectifiers 6 extend.

In accordance with the bipolar electrolyzer 50 for alkaline water electrolysis of the present embodiment, by controlling the length A, the length B, and the interval C as set forth above, a design of the bipolar electrolyzer 50 having a highly-productive zero-gap structure Z is made possible which improves the flows of the electrolyte and gases under a wide variety of electrolysis conditions, to control backmixing, thereby suppressing a surge of the electrolysis overvoltage during high current density operations.

As a result, when alkaline water electrolysis is conducted in high current density operations or variable power source operations, an increase in the temperature of the electrolyte is suppressed by reducing an increase in the temperature at outlets of the electrolysis compartments 5. This reduces convections in the electrolysis compartments 5 caused by disturbances of flows of gases and liquid in electrolysis compartments 5, and suppresses local temperature elevations of the electrolyte, which provides a high efficiency of electrolysis in a long term in a stable manner.

In addition to the perspective of further enhancing the above-described effects, also from the perspective of suppressing pressure fluctuations caused by intermittent fluctuations in the gas-liquid ratio in the electrode compartment 5, the length A, the length B, and the interval C may be preferably set to the following ranges.

In the present embodiment, the length A is preferably 0.40 m or more and 3.0 m or less, further preferably 0.50 m or more and 2.5 m or less, and more preferably 0.60 m or more and 2.0 m or less.

In the present embodiment, the length B is preferably 0.0050 m or more and 0.025 m or less, more preferably 0.0060 m or more and 0.023 m or less, and even more preferably 0.0070 m or more and 0.020 m or less.

In the present embodiment, the interval C is preferably 0.060 m or more and 0.10 m or less, more preferably 0.070 m or more and 0.10 m or less, and even more preferably 0.080 m or more and 0.10 m or less.

The ranges of the length A, the length B, and the interval C may be individually selected as appropriate for obtaining the effects of the present disclosure.

The distance (not illustrated) between the outmost flow rectifier 6 and the outer frame 3 in the direction orthogonal to the given direction D1 along the partition wall 1 is preferably, but not limited to, 0.050 m or more and 0.19 m or less, from the perspective of enhancing the effects of the present disclosure.

Additionally, we observed that an intermittent fluctuation in the gas-liquid ratio in the electrode compartments 5 intensified disturbances of the electrolyte during an operation relying on a variable power source obtained from renewable energy (e.g., wind power or solar power). We made efforts to identify methods to overcome this issue, and found out the following characteristics.

In the bipolar electrolyzer 50 for alkaline water electrolysis of the present embodiments (for example, any of (1) to (16) above), the electrode compartment 5 has a cross-sectional area D on a plane orthogonal to the given direction D1 along the partition wall 1 of 0.00050 $m^2$ or more and 0.0050 $m^2$ or less, and the value of $\{(2 \times D) / (B + C)\}$ is 0.015 m or more and 0.050 m or less.

Note that, when the cross-section of the electrode compartment 5 on a plane orthogonal to the given direction D1 along the partition wall 1 is substantially rectangular, the cross-sectional area D may be determined as (length B) × (interval C).

In addition, when the cross-section is substantially rectangular, the value of $\{(2 \times D) / (B + C)\}$ in general, is indicative of the hydraulic diameter Dh, which is the factor correlates with the state of the flow of a fluid, together with the cross-sectional area D.

By controlling the cross-sectional area D and the value of $\{(2 \times D) / (B + C)\}$ as set forth above, the effect of controlling flows of the liquid and gases to suppress a fluctuation of the gas-liquid ratio is more readily attained in wide ranges of the flow rate of the electrolyte and the temperature of the electrolyte. This improves the gas-liquid separation state, and is more likely suppress pressure fluctuations in the electrode compartments 5 and the pressure difference between the two electrode compartments.

As a result, the effects of the present disclosure of reducing an increase in the temperature of outlets of the electrolysis compartments 5 thereby suppressing an increase in the temperature of the electrolyte, and reducing convections caused in the electrolysis compartments 5 by disturbances of flows of gases and liquid in electrolysis compartments 5 thereby suppressing a local temperature elevations of the electrolyte, are enhanced in a stable manner in the electrolyzers 50 receiving a higher current density and having more cells.

From the perspective of further enhancing the above-described effects, in the present embodiments (for example, any of (1) to (16) above), the cross-sectional area D is preferably 0.0010 $m^2$ or more and 0.0040 $m^2$ or less, and particularly preferably 0.0010 $m^2$ or more and 0.0035 $m^2$ or less.

In the present embodiment, the value of $\{(2 \times D) / (B + C)\}$ is further preferably 0.020 m or more and 0.045 m or less, and further preferably 0.025 m or more and 0.040 m or less.

The ranges of the cross-sectional area D and the value of $\{(2 \times D) / (B + C)\}$ may be individually selected as appropriate for obtaining the effects of the present disclosure.

In the present disclosure, the shape of the electrode compartment 5 is not limited to the rectangular parallelepiped in the example in FIGS. 1-3, and may be modified in accordance with the plan view shapes of the partition walls 1 and the membranes 4, and the angle between the internal surface of the outer frame 3 on the side of the partition wall 1 and the partition wall 1, for example, and the electrode compartment 5 may have any shape as long as the effects of the present disclosure are obtained.

In the present disclosure, the arrangement of the flow rectifiers 6 in the electrode compartment 5 is not limited to the one in the example in FIGS. 1-3.

In the present disclosure, the number of the flow rectifiers 6 and/or the regular interval (pitch) between the flow rectifiers 6 in the direction orthogonal to the given direction D 1 along the partition wall 1 may be determined as appropriate as long as the effects of the present disclosure are obtained. Here, the interval between the flow rectifiers 6 may not be a constant.

In addition, in the present disclosure, the length of the flow rectifier 6, the angle between the flow rectifier 6 and the partition wall 1, the number of through-holes, and certain interval (pitch) of the through-holes with respect to the given direction D1 along the partition wall 1 may be determined as appropriate as long as the effects of the present disclosure are obtained. Here, the interval of the through-holes may not be a constant.

Although the partition walls 1, the anodes 2a, and the cathodes 2c in the example in FIGS. 1-3 are planar having certain thicknesses, this is not limitative to the present disclosure. They may have zig-zag or wave shapes in cross-section as a whole or in part, or may have rounded edges.

A prior art device having a zero-gap structure may experience an increase in the cell voltage in operations under variable power sources, such as renewable energies, for example. Hence, an additional requirement for electrolyzers for alkaline water electrolysis is that the cell voltage is less likely to increase even in operations under variable power sources, such as renewable energies, for example.

We found that the above-described issue could be overcome by suitably controlling the distance between an anode and a cathode current collector, the properties of materials, and the surface pressure being applied between a membrane, and an anode and/or a cathode, thereby completing the present disclosure.

More specifically, applications where electricity originated from renewable energies is converted into hydrogen for storage, for example, require device structures more precise than conventional devices. Therefore, for example, a new issue has been raised in that the electrolysis voltages of multiple cells vary, which may increase the electrolysis voltage over time. We have studied on this issue and it was hypothesized that the cause is deviations in the accuracies of fabrications and assemblies when a number of cells with large areas are staked for fabricating an electrolyzer. Therefore, we also studied on a method to allow such deviations to provide stable performances of cells. As a result, it was considered that a desirable zero-gap structure is not always provided due to deviations in the accuracies of fabrications and assemblies when cells are stacked, and we conceived of the following configurations as configurations to suppress them.

In an electrolyzer for alkaline water electrolysis of the present embodiments (for example, any of (1) to **(16)** above), the membrane 4 is in contact with the anode 2a and the cathode 2c thereby forming a zero-gap structure Z; the distance between the anode 2a and the cathode current collector 2r and/or the distance between the cathode 2c and the anode current collector is 1.0 mm or more and 6.0 mm or less, and a density of the conductive elastic body is 0.1 g/cm$^3$ or more and 4.5 g/cm$^3$ or less, in the zero-gap structure Z; and the surface pressure being applied between the membrane 4 and the cathode 2c and/or the anode 2a is 8.00 kN/m$^2$ or more and 100.00 kN/m$^2$ or less, in the zero-gap structure Z.

Note that the "distance between the anode and the current collector" refers to the distance between an anode 2a in an element and a cathode current collector 2r in another element adjacent to the element having an membrane 4 interposed therebetween, and is the distance between the surface of the cathode current collector 2r on the side of the conductive elastic body 2e, and the surface on which the anode 2a and the membrane 4 are in contact to each other. In addition, the "distance between the cathode and the anode current collector" refers to the distance between a cathode in an element and an anode current collector in another element adjacent to the element having an membrane interposed therebetween, and is the distance between the surface of the anode current collector on the side of the conductive elastic body and the surface on which the cathode and the membrane are in contact to each other.

Since the electrolyzer for alkaline water electrolysis of the present embodiment has the above-described configurations, the cell voltage is less likely increase even in operations under variable power sources, such as renewable energies, for example.

More specifically, it is considered that deviations in the accuracies of fabrications and assemblies when cells are stacked are eliminated by controlling the distances between an electrode and a current collector, and the properties of electrodes, the current collector, and the elastic body configuring the anode and/or cathode within the above-described ranges, which provides desirable zero-gaps in the entire cell stack. In addition, it is considered that stable zero-gap structures are maintained by absorbing continuous vibrations caused by gases in the zero-gap structures during long-term electrolysis.

Here, the electrolysis cell 65 of the present embodiments (for example, any of (1) to **(16)** above) has the above-described zero-gap structure Z; the distance between the anode 2a and the cathode current collector 2r and/or the distance between the cathode 2c and the anode current collector is 1.0 mm or more and 6.0 mm or less, and the density of the conductive elastic body 2e is 0.1 g/cm$^3$ or more and 4.5 g/cm$^3$ or less in the zero-gap structure Z; and the surface pressure being applied between the membrane 4 and the cathode 2c is 8.00 kN/m$^2$ or more and 100.00 kN/m$^2$ or less, in the zero-gap structure Z. This prevents pores in the membrane 4, which serve as passages of the electrolyte, from being blocked due to pressing on the membrane 4 by the electrode 2 in operations under variable power sources, such as renewable energies, for example, thereby suppressing an increase in the cell voltage. It also suppresses an increase in the cell voltage caused by an increased inter-electrode distance between the membrane 4 and the electrodes 2 due to vibrations of the membrane 4 as a result of a pressure deviation caused by gases generated at the electrodes 2 and the membrane surfaces. When the above-described variables do not fall the respective ranges, the above-described effects are less likely attained even if operational conditions are changed.

In the electrolysis cell 65 of the present embodiments (for example, any of (1) to **(16)** above), the distance between the anode 2a and the cathode current collector 2r and/or the distance between the cathode 2c and the anode current collector having the membrane 4 interposed therebetween, are 1.0 mm or more and 6.0 mm or less, preferably 1.2 mm or more and 5.0 mm or less, and more preferably 1.3 mm or more and 4.0 mm or less, in the zero-gap structure Z.

Here, when the zero-gap structure Z is provided with an anode complex and a cathode complex, the distance between the anode 2a and the cathode current collector 2r and the distance between the cathode 2c and the anode current collector may be 1.0 mm or more and 6.0 mm or less, or one of the distance between the anode 2a and the cathode current collector 2r and the distance between the cathode 2c and the anode current collector may be 1.0 mm or more and 6.0 mm or less. In the example in FIG. 2, in the zero-gap structure provided with an anode 2a and a cathode complex, the distance between the anode 2a and the cathode current collector 2r is 1.0 mm or more and 6.0 mm or less. In the present specification, the distance between an anode 2a and a cathode current collector 2r in a zero-gap structure Z including the anode 2a and a cathode complex 2r may also referred to as the "distance 'a'".

Note that the distance between the anode 2a and the cathode current collector 2r can be measured with the method described in the Examples below.

In the electrolysis cell 65 of the present embodiments (for example, any of (1) to **(16)** above), a thickness of the conductive elastic body is preferably 0.5 mm or more and 5.5 mm or less, and more preferably 0.7 mm or more and 4.5 mm or less in the zero-gap structure Z.

If the above-described thickness is 0.5 mm or more pores in the membrane 4, which serve as passages of the electrolyte, are prevented from being blocked due to pressing on the membrane 4 by the electrode 2 in operations under variable power sources, such as renewable energies, for example, thereby suppressing an increase in the cell voltage. In addition, the above-described thickness of 5.5 mm or less suppresses an increase in the cell voltage caused by an increased inter-electrode distance between the membrane 4 and the electrodes 5 due to vibrations of the membrane 4 as a result of a pressure deviation caused by gases generated at the electrodes 2 and the membrane surfaces.

Note that the "thickness of the conductive elastic body" refers to the thickness of a conductive elastic body between the anode 2a and the cathode current collector 2r and/or the thickness of a conductive elastic body between the cathode 2c and the anode current collector, in a zero-gap structure Z in which the distance between the anode 2a and the cathode current collector 2r and/or the distance between the cathode 2c and the anode current collector having the membrane 4 interposed therebetween are within the above-described range.

In the electrolysis cell 65 of the present embodiments (for example, any of (1) to **(16)** above), the distance between the current collector and the partition wall 1 is preferably 1 mm or more and 40 mm or less, and more preferably 5 mm or more and 25 mm or less.

A distance as described above of 1 mm or more facilitates escape of generated gas to the backside of the electrode, and also facilitates supply of the electrolyte. In contrast, a distance as described above of 40 mm or less induces backmixing by the generated gas, and facilitates escape of the gas attached to the interface between the membrane 4 and the electrode 2. Further, the temperature and the concentration of the electrolyte are more equalized in the electrode compartment 5.

Note that the "distance between the current collector and the partition wall 1" refers to the distance between the current collector and the partition wall 1 in a single element, and is the distance between the surface of the current collector on the side of the partition wall and the surface of the partition wall 1 on the side of that current collector.

In the electrolysis cell 65 of the present embodiments (for example, any of (1) to **(16)** above), the surface pressure being applied between the membrane 4 and the anode 2a and/or the cathode 2c is 8.00 kN/m$^2$ or more and 100.00 kN/m$^2$ or less, preferably 14.00 kN/m$^2$ or more and 90.00 kN/m$^2$ or less, and more preferably 19.00 kN/m$^2$ or more and 60.00 kN/m$^2$ or less, in the zero-gap structure Z. If the surface pressure is within the above-described range, pores in the membrane are prevented from collapsing and the cell voltage is less likely to increase.

Here, the "surface pressure being applied between the membrane and the anode and/or the cathode" refers to the surface pressure being applied between the membrane 4 and the anode 2a and/or the cathode 2c in a zero-gap structure Z where the distance between the anode 2a and the cathode current collector 2r and/or the distance between the cathode 2c and the anode current collector having the membrane 4 interposed therebetween, are within the above-described range.

Note that the above-described surface pressure can be measured with the method described in the Examples below.

In the electrolysis cell 65 of the present embodiments (for example, any of (1) to **(16)** above), a density of the conductive elastic body is 0.1 g/cm$^3$ or more and 4.5 g/cm$^3$ or less, preferably 0.2 g/cm$^3$ or more and 3.0 g/cm$^3$ or less, and further preferably 0.4 g/cm$^3$ or more and 2.5 g/cm$^3$ or less, in the above-described zero-gap structure. If the density of the conductive elastic bodies is within the above-described range, the surface pressure between the membrane and the electrode is appropriately controlled, and pores in the membrane are prevented from collapsing.

Here, the "density of the conductive elastic body" refers to the density of a conductive elastic body between the anode 2a and the cathode current collector 2r and/or a conductive elastic body between the cathode 2c and the anode current collector, in the zero-gap structure in which the distance between the anode 2a and the cathode current collector 2r and/or the distance between the cathode 2c and the anode current collector having the membrane 4 interposed therebetween are within the above-described range.

Note that the above-described density can be measured with the method described in the Examples below.

In the electrolysis cell 65 of the present embodiments (for example, any of (1) to **(16)** above), an area S1 of a current-carrying surface of the element is preferably 0.1 m$^2$ or more and 10 m$^2$ or less, and more preferably 0.15 m$^2$ or more and 8 m$^2$ or less. If the area of the current-carrying surface is 0.1 m$^2$ or more, electrolyte supply headers will have appropriate sizes, which makes fabrication thereof easily. If the area of the current-carrying surface is 10 m$^2$ or less, the seal surface pressure is more likely to be equalized and leakage of the electrolyte and gas is prevented.

The "area S1 of a current-carrying surface of an element" refers to the area of an electrode (anode and cathode) in the element, on the surface parallel to the partition wall. If the area of the anode is different from that of the cathode, their average is used.

In the electrolysis cell 65 of the present embodiments (for example, any of (1) to **(16)** above), the thickness 'd' of the element is preferably 10 mm or more and 100 mm or less. If the thickness of the element is 10 mm or more, the gas ratio inside gas-liquid chambers in the electrolysis cell is less likely to increase, which further prevents an increase in the cell voltage. If the thickness of the element is 100 mm or less, the influence of the pressure loss in the headers is reduced, which facilitates uniform distributions. In addition, the footprint is reduced to an appropriate size.

The "thickness 'd' of an element" refers to distance between partition walls 1 of two adjacent elements in the direction orthogonal to the partition walls 1.

In the present embodiment, the characteristics of the electrolyzes described above may be used alone or in combination.

An electrolyzer of the present embodiment may be an electrolyzer comprising: a plurality of bipolar elements overlapped one another with a membrane interposed therebetween, each bipolar element comprising an anode, a cathode, a partition wall separating the anode from the cathode, and an outer frame bordering the partition wall, the membrane being in contact with the anode and the cathode to form a zero-gap structure; and

a plurality of flow rectifiers that are arranged so as to be parallel to each other in electrode compartments so as to be parallel to a given direction along the partition wall, each electrode compartment being defined by the partition wall, the outer frame, and the membrane,

wherein a length A of the electrode compartment in the given direction is 0.40 m or more and 4.0 m or less, a length B of the electrode compartment in the direction orthogonal to the partition wall is 0.0030 m or more and 0.030 m or less, and an interval C between the plurality of flow rectifiers is 0.050 m or more and 0.19 m or less,

the plurality of bipolar elements each comprising the anode and the cathode, are overlapped one another having the membrane interposed therebetween, the membrane being a porous membrane,

the electrolyzer comprises a cathode complex including the cathode and a conductive elastic body and a cathode collector provided on a side of the cathode opposite to the membrane, and/or an anode complex including the anode and a conductive elastic body and an anode collector provided on a side of the anode opposite to the membrane,

wherein a distance between the anode and the cathode current collector and/or a distance between the cathode and the anode current collector are 1.0 mm or more and 6.0 mm or less,

a density of the conductive elastic body is 0.1 $g/cm^3$ or more and 4.5 $g/cm^3$ or less, and

a surface pressure being applied between a membrane and an anode and/or a cathode is 8 $kN/m^2$ or more and 100 $kN/m^2$ or less in a zero-gap structure.

The following provides a description of details of the components of the bipolar electrolyzer 50 for alkaline water electrolysis of the present embodiment.

In the following, preferred embodiments for enhancing the effect of the present disclosure are also described in detail.

- Partition wall -

Each partition wall 1 is provided between a cathode 2c and an anode 2a, which is preferably between the anode 2a and a cathode current collector, and/or between the cathode 2c and an anode current collector.

In the present embodiment, the shape of each partition wall 1 may be a planar shape having a predetermined thickness, yet is not particularly limited.

The shape of each partition wall 1 in a plan view is not particularly limited, and it may be a rectangular shape (such as a square or a rectangle) or a circular shape (such as a circle or an ellipse), where a rectangular shape may have a rounded corner.

In one embodiment, the partition wall 1 and the outer frame 3 are joined together by welding or any other technique, for example, and a flange protruding to the direction perpendicular to the plane of the partition wall 1 (an anode flange protruding toward the anode 2a or a cathode flange protruding toward the anode) is provided on the partition wall 1 and the flange may be a part of the outer frame 3.

The partition wall 1 may be used such that the given direction D1 along the partition wall 1 extends in the vertical direction, and specifically, when the partition wall 1 is rectangular in plan view as illustrated in FIGS. 2 and 3, the given direction D1 along the partition wall 1 extends in the same direction as the direction in which one pair of sides of two pairs of side facing each other extend (see FIGS. 1-7). In the present specification, this vertical direction is also referred to as the "electrolyte passage direction".

The size of each partition wall 1 is not particularly limited, and may be appropriately designed according to the size of the electrode compartment 5.

Particularly, when the partition wall 1 has a plate shape the partition wall 1 may have a thickness of 0.5 mm to 5 mm and the vertical and horizontal lengths thereof is not particularly limited.

When an anode rib and/or a cathode rib are joined to a partition wall by means of weld, for example, thereby forming a unified structure, the partition wall is not necessarily be thick since the partition wall is reinforced by the anode rib and/or the cathode rib. Usually the thickness of 0.5 mm to 2 mm is sufficient. A thickness is less than 0.5 mm makes welding of the partition wall to an anode rib or a cathode rib, and fabrications of the partition wall, difficult. A thickness of more than 2 mm is undesired since the fabrication cost and the weight of the electrolysis unit increase.

From the viewpoint of achieving uniform supply of electric power, each partition wall 1 is preferably made of a material having high conductivity, and from the perspectives of alkali resistance and heat resistance, preferred materials include nickel, nickel alloy, mild steel, and nickel alloy plated with nickel.

- Electrode -

In hydrogen production by alkaline water electrolysis of the present embodiment, reduction of energy consumption, specifically, reduction of electrolytic voltage presents a significant challenge. Since the electrolytic voltage greatly depends on the electrodes 2, the performances of the electrodes 2 are important.

The electrolytic voltage for alkaline water electrolysis, includes, in addition to the voltage required for the electrolysis of water *per se* that can be theoretically determined, the overvoltage of an anode reaction (generating oxygen), the overvoltage of a cathode reaction (generating hydrogen), and a voltage dependent on the inter-electrode 2 distance between the anode 2a and the cathode 2c. As used herein, the term "overvoltage" refers to a voltage that needs to be applied excessively beyond the theoretical electrolysis potential for providing a certain current flow, and its value depends on the current value. Under the same current condition, electrodes 2 having lower overvoltage can reduce the power consumption.

To provide low overvoltage properties, the requirements for an electrode 2 include high conductivity, high oxygen generation ability (or hydrogen generation ability), and high wettability of the electrolyte on the surface of the electrode 2.

It is also noted here that an electrode 2 for alkaline water electrolysis having low overvoltage properties is less susceptible, even in the case of using an unstable current source such as renewable energy, to corrosion of the substrate of the electrode 2 and the catalyst layer, detachment of the catalyst layer, dissolution into the electrolyte, and adhesion of inclusions to the membrane 4.

The dimension of each electrode is not particularly limited and may be determined according to the size of the electrode compartment 5; it may be 0.4 m to 4.0 m in length, 0.4 m to 6.0 m in width, and 0.1 mm to 3 mm in thickness.

As an electrode 2 according to the present embodiment, in order to increase the surface area used for electrolysis and to efficiently remove gas generated by electrolysis from the surface of the electrode 2, it is preferable that at least one of the anode or the cathode is a porous body, and it is more preferable that the anode and the cathode are porous bodies. In particular, in the case of a zero-gap electrolyzer, because it is necessary to remove the gas evolved from the back side in contact with the membrane 4, it is preferable that the surface of the electrode 2 in contact with the membrane and the opposite surface penetrate each other.

Examples of the porous body include a plain weave mesh, punching metal, expanded metal, metal foam, and the like.

Although the electrode 2 in the present embodiment may be a bare substrate or a substrate having a catalyst layer with a high reaction activity on its surface, the latter is preferred.

The material of the substrate is not particularly limited, yet mild steel, stainless steel, nickel, and a nickel-based alloy are preferable because of the resistance to the operating environment.

The catalyst layer of each anode 2a preferably has high oxygen-generating ability, and it is possible to use, for example, nickel, cobalt, iron, or a platinum group element. In order to realize desired activity and durability, the catalyst layer can be formed as a simple substance of a metal, a compound such as an oxide, a complex oxide or alloy composed of a plurality of metal elements, or a mixture thereof. Specific examples include nickel plating, alloy plating of nickel and cobalt, nickel and iron, and the like, complex oxides including nickel and cobalt such as $LaNiO_3$, $LaCoO_3$, and $NiCo_2O_4$, compounds of platinum group elements such as iridium oxide, carbon materials such as graphene, and the like. Organic substances such as polymers may be contained in order to improve durability and adhesion to the substrate.

The catalyst layer of each cathode 2c preferably has high oxygen-generating ability, and it is possible to use, for example, nickel, cobalt, iron, or a platinum group element. In order to realize desired activity and durability, the catalyst layer can be formed as a simple substance of a metal, a compound such as an oxide, a complex oxide or alloy composed of a plurality of metal elements, or a mixture thereof. Specifically, examples include Raney Nickel; Raney alloys made of combinations of multiple materials (e.g., nickel and aluminum, and nickel and tin); porous coating made by spraying nickel compounds or cobalt compounds as raw materials by plasma thermal spraying; alloys and composite compounds of nickel and an element selected from cobalt, iron, molybdenum, silver, and copper, for example; elementary metals and oxides of platinum group elements with high hydrogen generation abilities (e.g., platinum and ruthenium); mixtures of elementary metals or oxides of those platinum group element metals and compounds of another platinum group element (e.g., iridium or palladium) or compounds of rare earth metals (e.g., lanthanum and cerium); and carbon materials (e.g., graphene). For providing higher catalyst activity and durability, the above-listed materials may be laminated in a plurality of layers, or may be contained in the catalyst layer. An organic material, such as a polymer material, may be contained for improved durability or adhesiveness to the substrate.

If the catalyst layer is too thick, the electric resistance may increase, resulting in an increased overvoltage. On the contrary, if the catalyst layer is too thin, it may be dissolved or peel off during long-time electrolysis and/or when the electrolysis is stopped, causing degradation of the electrode 2, resulting in an increased overvoltage.

For those reasons, the thickness of the catalyst layer is preferably 0.2 $\mu$m or more and 1000 $\mu$m or less, and more preferably 0.5 $\mu$m or more and 300 $\mu$m or less.

Note that the thickness of the catalyst layer can be measured by, for example, observing the cross section of the electrode 2 under an electron microscope.

Examples of the method of forming a catalyst layer on a substrate include plating, thermal spraying (e.g., plasma thermal spraying), thermolysis by applying a solution for a precursor layer on a substrate followed by heating, a method by blending a catalyst material with a binder component to be immobilized on a substrate, and vacuum film deposition (e.g., sputtering).

In the present embodiment, the specific surface area of the electrodes 2 is preferably 0.001 $m^2/g$ or more and 1 $m^2/g$ or less, and more preferably, 0.005 $m^2/g$ or more and 0.1 $m^2/g$ or less. If the specific surface area of the cathode (the specific surface area of the whole electrode 2 including the substrate) is small, the reactive active sites per unit area are reduced and low overvoltage properties may not be obtained. On the other hand, if the specific surface area of the electrodes 2 for water electrolysis is excessively large, the mechanical strength of the catalyst layer decreases and the durability may decrease.

The specific surface area can be measured by, for example, the BET method. A measurement sample is placed in a dedicated cell and subjected to pretreatment through vacuum evacuation by heating to remove adsorbates on pore surfaces in advance. Then, the adsorption/desorption isotherm of gas adsorption to the measurement sample is measured at -196°C. The specific surface area of the measurement sample can be obtained from analysis of the obtained adsorption/desorption isotherm by the BET method.

- Outer frame -

Although the shape of each outer frame 3 according to the present embodiment is not particularly limited as long as it can border the corresponding partition walls 1, each outer frame 3 may have an inner surface extending over the periphery of each partition wall 1 along the direction perpendicular to the plane of each partition wall 1.

The shape of each outer frame 3 is not particularly limited, and may be appropriately determined according to the shape of the partition walls 1 in plan view.

The size of each outer frame 3 is not particularly limited, and it may be designed according to the external dimensions of the electrode compartment 5. The width of the outer frame 3 may be 10 mm to 40 mm and is preferably 15 mm to 30 mm, and the length in which the outer frame 3 extends is not particularly limited.

In one embodiment, the partition wall 1 and the outer frame 3 are joined together by welding or any other technique, for example, and a flange protruding to the direction perpendicular to the plane of the partition wall 1 (an anode flange protruding toward the anode 2a or a cathode flange protruding toward the anode the cathode 2c) is provided on the partition wall 1 and the flange may be a part of the outer frame 3.

The respective lengths of the anode flange and the cathode flange in this case, may be, but are not limited to, 5 mm to 20 mm, and is preferably 7.5 mm to 15 mm.

As a material of each outer frame 3, a material having conductivity is preferable, and from the perspectives of alkali resistance and heat resistance, the following materials are preferred: nickel, nickel alloy, mild steel, and nickel alloy plated with nickel.

- Membrane -

As the membrane 4 used in each bipolar electrolytic bath 50 for alkaline water electrolysis according to the present embodiment, an ion permeable membrane 4 is used in order to isolate the generated hydrogen gas and oxygen gas while conducting ions. For this ion permeable membrane 4, it is possible to use an ion exchange membrane having ion exchange ability and a porous membrane capable of permeating the electrolyte. The ion permeable membrane 4 preferably has low gas permeability, high ionic conductivity, low electronic conductivity, and high strength.

- Porous membrane -

A porous membrane has a plurality of fine through-holes, and has a structure that permits the electrolyte to pass through the membrane 4. Control of the porous structure such as the pore size, porosity, and hydrophilicity is very important since the electrolyte permeates into the porous membrane to develop ion conduction. On the other hand, the porous membrane is required to prevent not only the electrolyte but also the generated gas from passing therethrough, that is, to have gas barrier properties. From this perspective control of the porous structure is also important.

The porous membrane has a plurality of fine through-holes, and may be, for example, a polymeric porous membrane, an inorganic porous membrane, a woven fabric, or a nonwoven fabric. These may be prepared with known techniques.

Examples of the manufacturing method of a polymer porous membrane include a phase conversion method (microphase separation method), an extraction method, a draw method, and a wet gel draw method. In the phase conversion method (microphase separation method), a polymer material is dissolved in a good solvent to form a film from the resultant solution, and pores are provided by causing phase separation of the film in a poor solvent (non-solvent-induced phase separation). In the extraction method, a film is formed from a polymer material kneaded with inorganic powder, such as powder of calcium carbonate, and the inorganic powder is molten and extracted to provide pores. In the draw method, a film of a polymer material having a certain crystal structure is drawn in a certain condition to provide pores. In the wet gel draw method, a polymer material is swelled with an organic solvent, such as liquid paraffin, to form a gel sheet, which is then drawn under a certain condition, followed by extraction and removal of the organic solvent.

Examples of the manufacturing method of an inorganic porous membrane include a sintering method. In the sintering method, a product resulting from pressing or extrusion is sintered to cause unification while pores remaining in the membrane.

Examples of the manufacturing method of a non-woven fabric include spunbonding and elecrospinning. In spunbonding, yeans spun from molten pellets are pressed with heat rolls to cause unification to form a sheet. In elecrospinning, molten polymer is injected while a high voltage is being applied across a syringe containing the molten polymer and a current collector, and thin elongated fibers are connected on the current collector.

The porous membrane preferably contains a polymer material and hydrophilic inorganic particles, and the hydrophilic inorganic particles provide hydrophilicity to the porous membranes.

--- Porous polymer membrane ---

Examples of the polymer material include polysulfone, polyethersulfone, polyphenylsulfone, polyvinylidene fluoride, polycarbonate, tetrafluoroethylene-perfluoroalkyl vinyl ether copolymer, tetrafluoroethylene-ethylene copolymer, polyvinylidene fluoride, polytetrafluoroethylene, perfluorosulfonic acid, perfluorocarboxylic acid, polyethylene, polypropylene, polyphenylene sulfide, polyparaphenylene benzobisoxazole, polyketone, polyimide, and polyetherimide, for example. Of these, polysulfone, polyethersulfone, polyphenylsulfone, polyphenylene sulfide, and polytetrafluoroethylene are preferred, and more preferred is polysulfone. They may be use alone or in combination of two or more thereof.

By using polysulfone, polyethersulfone, and polyphenylsulfone as the polymer material, the resistance to high-temperature and high-concentration alkaline solutions is further increased.

In addition, the membrane 4 can be produced in a further simplified manner, for example, by employing a process such as non-solvent-induced phase separation. In particular, the use of polysulfone enables precise control on the pore size.

Polysulfone, polyethersulfone, and polyphenylsulfone may be cross-linked. The weight average molecular weight of the cross-linked polysulfone, polyethersulfone, and polyphenylsulfone is preferably such that the polystyrene-equivalent weight average molecular weight is 40000 or more and 150000 or less. Examples of the method for cross-linking include, but are not limited to, cross-linking by means of irradiation with a radioactive ray such as an electron beam or $\gamma$-ray, and thermal cross-linking using a cross-linker. Note that the polystyrene-equivalent weight average molecular weight can be measured by the GPC.

To achieve desired membrane properties such as high separation performance and strength, the pore sizes in the porous membrane is preferably controlled. For use in alkaline water electrolysis, the pore size is preferably controlled so that the membrane prevents mixing of oxygen gas evolved from the anode 2a and hydrogen gas evolved from the cathode 2c and also reduces the less voltage loss during electrolysis.

The larger the average pore size of the porous membrane is, the greater the porous membrane permeation becomes. Particularly, the ion permeability of the porous membrane increased, and the voltage loss tends to be reduced. In addition, an increase in the average pore size of the porous membrane provides a decrease in surface area of contact with the alkali water, which tends to reduce degradation of the polymer.

On the other hand, the smaller the average pore size of the porous membrane is, the higher the separation performance of the porous membrane is, and the better the gas impermeability of the membrane during electrolysis. Additionally, the porous membrane with the smaller average pore size can securely hold small-size hydrophilic inorganic particles carried on the porous membrane described later and keep them from detachment. High ability to hold hydrophilic inorganic particles can thus be achieved to allow the particles to exert their effect over a long period of time.

To improve the separation performance of the porous membrane, the maximum pore sizes in the porous membrane is preferably controlled. Specifically, the smaller the difference between the average pore size and the maximum pore size of the porous membrane and maximum pore size is, the higher the separation performance of the porous membrane becomes. Particularly, since the variation in pore size of pores in the porous membrane is made smaller, during electrolysis, it is possible to reduce the likelihood that formation of pinholes will lower the purities of gases evolved from the two electrode compartments 5.

The average water permeation pore size (average pore size) of the porous membrane is preferably 0.01 $\mu$m or more and 1.0 $\mu$m or less, and more preferably 0.1 $\mu$m or more and 0.5 $\mu$m or less. If the average water permeation pore size is 0.01 $\mu$m or more, pores in the porous polymer membrane is less likely to be occluded and clogged by impurities. An average water permeation pore size of 1.0 $\mu$m or less provides an excellent gas impermeability.

From these perspective, the porous membrane of the present embodiment has preferably a range of the average pore size of 0.1 $\mu$m or more and 1.0 $\mu$m or less and/or a range of the maximum pore size of more than 0.1 $\mu$m and 2.0 $\mu$m or less, and preferably a range of the average pore size of 0.01 $\mu$m or more and 1.0 $\mu$m or less and/or a range of the maximum pore size of more than 0.01 $\mu$m and 2.0 $\mu$m or less. A porous membrane having the pore sizes within those ranges can provide both an excellent gas impermeability and a high ion permeability. The pore sizes of the porous membrane are preferably controlled in a temperature range where the membrane is actually used. Accordingly, the porous membrane to be used as a membrane 4 for electrolysis in the environment of 90°C, for example, preferably satisfies the above-described ranges of pore sizes at 90°C. As the ranges for providing more excellent gas impermeability and an even high ion permeability as a membrane 4 for alkaline water electrolysis, the porous membrane has more preferably a range of the average pore size of 0.1 $\mu$m or more and 0.5 $\mu$m or less and/or a range of the maximum pore size of 0.5 $\mu$m or more and 1.8 $\mu$m or less; and more preferably has a range of the average pore size of 0.01 $\mu$m or more and 0.5 $\mu$m or less and/or a range of the maximum pore size of 0.05 $\mu$m or more and 1.8 $\mu$m or less.

The average water permeation pore size and the maximum pore size of a porous membrane can be measured by the following procedure.

Note that the "average water permeation pore size of the porous membrane" refers to an average water permeation pore size measured in the following procedure using an integrity testing system ("Sartocheck Junior BP-Plus" available from Sartorius Stedim Japan K.K.). First, the porous membrane, together with a core material, is cut into a given-sized piece as a sample. This sample is set in an arbitrary pressure-resistant vessel, and the vessel is filled with pure water. Next, the pressure-resistant vessel is placed in a thermostatic chamber set to a predetermined temperature, and a measurement is initiated after the interior of the pressure-resistant vessel reaches the predetermined temperature. After the measurement is started, the front of the sample is pressurized with nitrogen. The values of the pressure and the permeation flow rate at which pure water permeates through the sample from its back are recorded. The average water permeation pore size can be determined by the following Hagen-Poiseuille equation using the gradient of the pressures versus the water permeation flow rates at pressures between 10 kPa and 30 kPa:

$$\text{Average water permeation pore size (m)} = \{32 \eta L \mu_0 / (\varepsilon P)\}^{0.5}$$

where $\eta$ is the viscosity (Pa-S) of water, L is the thickness (m) of the porous membrane, and $\mu_0$ is an apparent flow rate calculated by the equation: $\mu_0$ (m/s) = flow rate (m$^3$/s) / flow passage area (m$^2$). In addition, $\varepsilon$ is the porosity and P is the pressure (Pa).

The maximum pore size can be measured by the following procedure using the integrity testing system ("Sartocheck Junior BP-Plus" available from Sartorius Stedim Japan K.K.). First, the porous membrane, together with a core material, is cut into a given-sized piece as a sample. This sample is wet with pure water to impregnate the pores in the porous membrane with pure water, and then the sample is set in a pressure-resistant vessel for measurements. Next, the pressure-resistant vessel is placed in a thermostatic chamber set to a predetermined temperature, and a measurement is initiated after the interior of the pressure-resistant vessel reaches the predetermined temperature. After the measurement is started, the front of the sample is pressurized with nitrogen. The nitrogen pressure at which gas bubbles begin to continuously emerge on the back of the sample is employed as a bubble point pressure. The maximum pore size can be determined by the following bubble point equation which is a modification of the Young-Laplace equation:

$$\text{Maximum pore size (m)} = 4\gamma\cos\theta / P$$

where $\gamma$ is the surface tension (N/m) of water, $\cos\theta$ is the contact angle (rad) between the porous membrane surface and water, and P is the bubble point pressure (Pa).

For the membrane 4 for alkaline water electrolysis of the present embodiment, the porosity of the porous membrane is preferably controlled to maintain gas impermeability and hydrophilicity, to prevent a reduction in the ion permeability caused by attached bubbles, and to provide stable electrolysis properties (such as low voltage loss) for a long period of time.

The lower limit of the porosity of the porous membrane is 30% or more, preferably 35% or more, and more preferably 40% or more to achieve a good balance between high gas impermeability and low voltage loss. In addition, the upper limit of the porosity is preferably 70% or less, more preferably 65% or less, further preferably 60% or less, and further more preferably 55% or less. In addition, the porosity of the membrane is preferably 30% or more 70% or less. A porosity of the porous membrane of the above-described lower limit or more can lower the cell voltage. A porosity of the porous membrane of the upper limit or less provides a high gas impermeability and a high mechanical strength, making the membrane resistant to deformation. A gap between the porous membrane and an electrode is less likely and pores in the porous membrane are less likely to collapse during a long-term usage. A porosity of the porous membrane of the upper limit value or less facilitates ions to permeate through the membrane, suppressing the voltage loss of the membrane. A porosity of the membrane of 30% or more prevents the cell voltage from increasing excessively. A porosity of 70% or less provides a high gas impermeability and a high mechanical strength, making the membrane resistant to deformation. A gap between the porous membrane and an electrode is less likely and pores in the porous membrane are less likely to collapse during a long-term usage.

The "porosity of the porous membrane" refers to the proportion of open pores determined by the Archimedes method, and can be determined the following equation:

$$\text{Porosity } \varepsilon \ (\%) = \rho \ / \ (1 + \rho) \times 100$$

In this equation, $\rho$ is equal to (W3 - W1) / (W3 - W2), where W1 is a dry weight (g) of the porous membrane, W2 is a weight in water (g) of the porous membrane, and W3 is a water-saturated weight (g) of the porous membrane.

In a method for measuring the porosity, the porous membrane washed with pure water is cut into three pieces with a size of 3 cm × 3 cm, and the three pieces are used as measurement samples. First, W2 and W3 of the sample are measured. After that, the porous membrane is left to dry in a dryer set at 50°C for 12 hours or more, and W1 of the membrane is then measured. The porosity is determined from the values of W1, W2, and W3. The values of the porosity are determined for the three samples, and the arithmetic average of the determined values is employed as the porosity P.

The porosity of a membrane 4 for alkaline water electrolysis correlates with the opening degree of the membrane surface. For example, the higher the porosity is, the higher the opening degree tends to increase. In addition, the higher the opening degree is, the higher the hydrophilicity becomes because of effects of the hydrophilic inorganic particles. In the present embodiment the porosity of the porous membrane is preferably controlled, also from the perspectives of maintaining both a low voltage loss and a high gas impermeability at higher level, and also maintaining the hydrophilicity of surface of the porous membrane at a high level.

The thickness of the porous membrane is, but not limited to, preferably 100 $\mu$m or more and 700 $\mu$m or less, more preferably 100 $\mu$m or more and 600 $\mu$m or less, and further preferably 200 $\mu$m or more and 600 $\mu$m or less.

If the thickness of the porous membrane is the above-described lower limit or more, the porous membrane is less likely to be tear when being pierced, for example, which lowers the possibility of short-circuit of the electrodes. The gas impermeability is also improved. If the thickness is the upper limit or less, the voltage loss is less likely to increase. The porous membrane also is less affected by the deviation of the thickness.

If the thickness of 100 $\mu$m or more, the porous membrane is less likely to be tear when being pierced, for example, which lowers the possibility of short-circuit of the electrodes. The gas impermeability is also improved. If the thickness is 600 $\mu$m or less, the voltage loss is less likely to increase. The porous membrane is less affected by the deviation of the thickness.

When the porous membrane has a thickness of is 250 $\mu$m or more, a further better gas impermeability is provided and the strength of the porous membrane against an impact is further enhanced. From this perspective, the lower limit of the thickness of the porous membrane is more preferably 300 $\mu$m or more, further preferably 350 $\mu$m or more, and even further preferably 400 $\mu$m or more. When the thickness of the porous membrane is 700 $\mu$m or less, permeation of ions is less likely to be blocked by the resistance by the electrolyte contained in the pores during electrolysis operation, which helps to maintain better ion permeability. From this perspective, the upper limit of the thickness of the porous membrane is more preferably 600 $\mu$m or less, further preferably 550 $\mu$m or less, and even further preferably 500 $\mu$m or less. The above effects are enhanced, especially when the polymer resin contains at least one selected from the group consisting of polysulfone, polyethersulfone, and polyphenylsulfone.

The thickness of the membrane can be measured with the method described in the Examples below.

--- Hydrophilic inorganic particles ---

The porous membrane preferably contains hydrophilic inorganic particles for providing a high ion permeability and a high gas impermeability. The hydrophilic inorganic particles may be made to attach to the surfaces of the porous membrane, or a part of the inorganic particles may be embedded in the polymer material constructing the porous membrane. Furthermore, hydrophilic inorganic particles encapsulated in the voids in the porous membranes are less likely to be detached from the porous membrane, which contributes to maintain the performance of the porous membrane for a long time.

Examples of the hydrophilic inorganic particles include particles of at least one inorganic substance selected from the group consisting of: oxides or hydroxides of zirconium, bismuth, and cerium; oxides of Group IV elements of the periodic table; nitrides of Group IV elements of the periodic table; and carbides of Group IV elements of the periodic table. Of these, oxides of zirconium, bismuth, and cerium, and oxides of Group IV elements of the periodic table are more preferred from the perspective of the chemical stability, further preferred are oxides of zirconium, bismuth, and cerium, and zirconium oxide.

-- Porous support --

When a porous membrane is used as a membrane 4, the porous membrane may be used with a porous support. The membrane preferably is structured such that a porous membrane encloses a porous support, more preferably is structured such that porous membranes are laminated on both surfaces of a porous support. The membrane may have a structure where porous membranes are laminated on both surfaces of a porous support in a symmetric manner.

A porous support may be provided for the purpose of further enhancing the strength of the membrane 4. For example, defects such as cuts and tears in, and stretching of, the membrane 4 due to mechanical stresses can be prevented. The membrane having a structure where porous membranes are laminated on both surfaces of a porous support can, even when scratches or holes (e.g., pinholes) are made in one surface of the porous support, maintain gas impermeability by means of the porous membrane laminated on the other surface of the porous support. When the membrane is structured such that porous membranes are laminated on both surfaces of a porous support in a symmetric manner, curling of the membrane is effectively prevented, and ease of handling of the membrane during transportation or during installation of the membrane is further improved.

The material of the porous support is preferably, but not limited to, a material that does not substantially reduce the permeability of the membrane 4 to ions in an electrolyte. Examples of the material of the porous support include, but are not limited to, polyphenylene sulfide, polyethylene, polypropylene, fluorine resin, polyparaphenylene benzobisoxazole, polyketone, polyimide, and polyetherimide. Of these, polyphenylene sulfide is preferably contained. The use of polyphenylene sulfide provides the porous support with a high resistance to high-temperature and high-concentration alkaline solutions and a high chemical stability against active oxygen evolved from an anode during water electrolysis process. In addition, since polyphenylene sulfide is readily processed into various forms, such as a woven fabric and a non-woven fabric, it can be appropriately modified according to the intended application or intended usage environment. They may be use alone or in combination of two or more thereof.

Examples of the porous support include a mesh, a porous membrane, a non-woven fabric, a woven fabric, and a composite fabric including a non-woven fabric and a woven fabric enclosed in the non-woven fabric. They may be use alone or in combination of two or more thereof. Examples of more preferred forms of the porous support include a mesh substrate made up of monofilaments of polyphenylene sulfide and a composite fabric including a non-woven fabric and a woven fabric enclosed in the non-woven fabric.

- Ion exchange membrane -

Ion exchange membranes are categorized into a cation exchange membrane that selectively allows permeation of cations and an anion exchange membrane that selectively allows permeation of anions, and either one may be used.

The material of the ion exchange membrane is not particularly limited, and any known materials can be used. For example, a fluorine-based resin or a modified resin of a polystyrene-divinylbenzene copolymer can be suitably used. In particular, a fluorine-based ion exchange membrane is particularly preferable because it has excellent heat resistance and chemical resistance, for example.

Examples of the fluorine-based ion exchange membrane include ones containing a fluorine-based polymer functioning to selectively allow permeation of ions generated during electrolysis and having ion exchange groups. As used herein, the "fluorine-based polymer having ion exchange groups" refers to fluorine-based polymers that have ion exchange groups or ion exchange group precursor groups that are capable of being converted into ion exchange groups by hydrolysis. For example, examples include polymers that have a fluorinated hydrocarbon principal chain and functional groups capable of being converted into ion exchange groups by hydrolysis, and allow melt processing.

The Molecular weight of the fluorine-based copolymer is, but not limited to, preferably has a melt flow index (MFI) of 0.05 to 50 (g/10 minutes) and more preferably 0.1 to 30 (g/10 minutes) when the precursor thereof is measured in accordance with ASTM D 1238 (under the measurement condition of the temperature of 270°C and the load of 2160 g).

Examples of the ion exchange groups contained in the ion exchange membrane include anion exchange groups, such as sulfonate groups, carboxylate groups, and phosphate groups, and cationic exchange groups, such as quaternary ammonium groups.

By adjusting equivalent weight EW of the ion exchange groups, an excellent ion exchange ability and a high hydrophilicity are provided to the ion-exchange membrane. Also, ion exchange groups can be controlled so as to have smaller clusters (minute locations where an ion exchange group coordinates or adsorbs a water molecule), which tends to increase the alkali resistance and the ion selective permeability.

The equivalent weight EW can be measured by substituting the ion exchange membrane with salt and carrying out a reverse titration of the solution with an alkali or acid solution. The equivalent weight EW can be adjusted by selections of the copolymerization ratio of raw material monomers and monomer types.

The equivalent weight EW of the ion exchange membrane is preferably 300 or more from the perspectives of the hydrophilicity and the water-resistance of the membrane, and is preferably 1300 or less from the perspectives of the hydrophilicity and the ion exchange ability.

The equilibrium moisture content of the ion exchange membrane is preferably 5% by mass or more, and more preferably 10% by mass or more. The equilibrium moisture content of the ion exchange membrane is preferably 60% by mass or less, and more preferably 40% by mass or less.

The "equilibrium moisture content" of an ion exchange membrane refers to the saturated water absorption (Wc) of the ion-exchange membrane allowed to reach an equilibrium for 24 hours at 23°C at 50% relative humidity (RH) , relative to a membrane that is formed from a resin composition in a dispersion with water and an alcohol-based solvent, and is then allowed to dry at 160°C or lower.

If the equilibrium moisture content of the ion exchange membrane is 5% by mass or more, the electric resistance, the current efficiency, the resistance to oxidation, and the ion selective permeability of the membrane tend to be improved. On the other hand, when the equilibrium moisture content is 60% by mass or less, the membrane tends to have a higher dimensional stability and strength and an increase in water-soluble contents tends to be suppressed.

The maximum membrane moisture content of the ion exchange membrane is, but not limited to, preferably 10% by mass or more, and more preferably 15% by mass or more, from the perspectives of the electric resistance, the current efficiency, the resistance to oxidation, and the ion selective permeability of the membrane. The maximum membrane moisture content is preferably 80% by mass or less, and more preferably 50% by mass or less from the perspectives of the dimensional stability and the strength of the membrane.

Here, the "maximum membrane moisture content" refers to the highest one of water contents obtained during a measurement of the equilibrium moisture content.

The equilibrium moisture content and the maximum membrane moisture content of the ion exchange membrane can be adjusted in the same manner as the adjustment of the EW described above.

The ion exchange membrane preferably has, but is not limited to, a thickness ranging from 5 $\mu$m to 300 $\mu$m from the perspectives of the ion permeability and strength.

The ion exchange membrane may be subjected to a surface treatment for improving the hydrophilicity of the surfaces. Specifically, examples of the surface treatment include coating with hydrophilic inorganic particles, such as those of zirconium oxide, and provisions of irregularities on the surfaces.

The ion exchange membrane is preferably used with a reinforcer from the perspective of the membrane strength. Examples of the reinforcer include, but are not limited to, typical woven fabrics and non-woven fabrics, and porous membranes made from various materials. Such porous membranes are, but not limited to, preferably PTFE-based membrane provided with porosity by means of stretching.

((Zero gap structure))

In each bipolar element 60 in a zero-gap cell, as a means for reducing the distance between the electrodes, it is preferable to dispose a spring, which is an elastic body, between an electrode 2 and the corresponding partition wall to support the electrode 2 with the spring. For instance, in a first example, a spring made of a conductive material is attached to the partition wall 1, and the electrode 2 may be attached to the spring. In a second example, a spring is attached to an electrode rib 6 attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce non-uniformity in the pressure of the electrode 2 against the membrane 4.

Further, by strengthening the rigidity of the other electrode 2 paired with the electrode 2 supported via the elastic body (for example, by making the rigidity of the anode stronger than the rigidity of the cathode), the other electrode 2 is structured to have less deformation even when pressed. On the other hand, the electrode 2 supported via the elastic body has a flexible structure capable of deforming when pressed upon the membrane 4 such that irregularities due to fabrication accuracy of the electrolyzer 50, deformation of the electrode 2, and the like can be absorbed, and a zero-gap structure can be maintained.

More specifically, a three-layered structure may be formed in which a current collector 2r is attached to an end of the flow rectifier 6 (the rib 6) electrically contacting the partition wall, and a conductive elastic body 2e is attached to the upper side of the current collector 2r, i.e., the side opposite to the partition wall; and an electrode 2 is overlapped on the upper side, i.e., the membrane 4 side adjacent to the conductive elastic body 2e. The elastic body is constituted from the current collector 2r and the conductive elastic body 2e.

In the present specification, a three-layered laminate structure including an electrode, a conductive elastic body, and a current collector is also referred to as an "electrode complex (anode complex or cathode complex)" .

Zero gap structures Z include gap structures formed between the anode terminal element 51a and the bipolar element 60, between two adjacent bipolar elements 60, and between the bipolar element 60 and the cathode terminal element 51c.

As illustrated in FIG. 2, in the bipolar electrolyzer 50 for alkaline water electrolysis of the present embodiment, the conductive elastic body 2e and current collector 2r are provided so as to be sandwiched between the cathode 2c or the anode 2a and the partition wall 1, such that the conductive elastic body 2e is sandwiched between the cathode 2c or the anode 2a and the current collector 2r. Further, it is preferable that the cathode current collector 2r is in contact with the rib 6 of the cathode.

As illustrated in FIG. 2, the zero-gap structure Z of each electrolytic cell 65 for alkaline water electrolysis according to the present embodiment is preferably configured such that bipolar elements 60 are overlapped one another having a membrane 4 interposed therebetween, in which an anode rib 6 and an anode 2a are stacked in this order on the anode side of the partition wall 1; and a cathode rib 6, a cathode current collector 2r, a conductive elastic body 2e, and a cathode 2c are stacked in this order on the cathode side, and the membrane 4 is in contact with the anode 2a and the cathode 2c.

- Current collector -

Current collectors are classified into a cathode current collector and an anode current collector.

The current collector 2r transmits electricity to the conductive elastic body 2e and the electrode 2 stacked thereover, supports the loads received from them, and has a roll of allowing the gas generated from the electrodes 2 to pass through to the partition wall 1 successfully. The current collector is thus preferably formed as an expanded metal, a punched porous plate, or the like. In this case, the aperture ratio of the current collector 2r is preferably within a range allowing the hydrogen gas generated from the electrode 2 to be extracted to the partition wall 1 side without any problems. However, if the aperture ratio is too high, the strength or the conductivity to the conductive elastic body 2e may be lowered. If it is too small, gas escape may be hindered.

Nickel, nickel alloy, stainless steel, mild steel, and the like can be used as the material of the current collector from conductivity and alkali resistance perspectives, yet from the perspective of corrosion resistance, nickel, mild steel, stainless steel, and nickel alloy plated with nickel are preferred. The current collector 2 are secured to the rib 6 by means of spot welding, laser weld, or the like.

- Conductive elastic body -

It is essential that the conductive elastic body 2e is provided between the current collector 2r and the electrode 2 and is in contact with the current collector 2r and the electrode 2, and that the conductive elastic body allows the electricity to be transmitted to the electrode and does not hinder the diffusion of the gas generated from the electrode 2. This is because if the diffusion of gas is hindered, the electrical resistance increases and the area of the electrode 2 used for electrolysis decreases, resulting in lower electrolysis efficiency. The most important role is to bring the membrane 4 and the electrode 2 into close contact with each other by evenly applying an appropriate pressure to the electrode 2 so as not to damage the membrane.

As the conductive elastic body 2e, any of generally well-known elastic bodies made from wires may be used. The conductive elastic body 2e is preferably a corrugated cushion mat of woven nickel wires having a wire diameter of about 0.05 mm to 0.5 mm (preferably 0.1 mm or more and 0.5 mm or less, more preferably 0.12 mm or more and 0.35 mm or less), because the density of the conductive elastic bodies can be reduced and a more stable zero-gap structure Z can be provided. A wire diameter of 0.1 mm or more and 0.5 mm or less is preferred since the density of the conductive elastic bodies can be reduced, which provides the effect of suppressing an increase in the cell voltage as described above. The wire diameter of the conductive elastic body can be measured with the method described in the Examples below.

The material of the wire is, but not limited to, nickel, nickel alloy, mild steel, and nickel alloy plated with nickel from the perspectives of the conductivity and the alkali resistance.

In general, the conductive elastic body 2e having a thickness of about 1 mm to 20 mm may be used.

The conductive elastic body 2e can have a flexibility within a range of the flexibility of well-known elastic bodies. For example, elastic bodies with the elasticity of a repulsive force at 50% compressive deformation of 30 g/cm$^2$ to 300 g/cm$^2$ may be used. The conductive elastic body 2e may be used so as to be overlapped on the current collector 2r made of a conductive plate. The attachment can be carried out by means of generally known techniques, such as appropriately securing with spot welding or attachments by means of resin pins or metal wires, for example.

Note that the repulsive force at 50% compressive deformation can be measured in accordance with Japanese Industrial Standards (JIS) K 6400. For example, a table-top type precision universal tester model number AGS-1kNX available from Shimadzu Corporation may be used under the condition for a compression test mode at ordinary temperatures and under the atmospheric pressure.

An electrode 2 may be overlapped directly on the conductive elastic body 2e, or may be overlapped having another conductive sheet interposed therebetween.

The conductive elastic body may have a conductivity such that the electric resistivity measured by a tester or digital multi-meter of $1 \times 10^{-5}$ $\Omega \cdot$m to $1 \times 10^{-9}$ $\Omega \cdot$m, for example.

Substrates for the electrodes 2 used for the zero-gap structure Z are preferably ones made from small-diameter wires and having smaller mesh count because of high flexibility. Substrates of generally known materials may be used. For example, substrates made from nickel, nickel alloy, stainless steel, and mild steel; and substrates made from nickel alloy, stainless steel, and mild steel alloy plated with nickel may be used for the cathode 2c. These substrates preferably have a wire diameter ranging from 0.05 mm to 0.5 mm and a mesh opening ranging from about 30 mesh to about 80 mesh.

The electrode 2 for constructing the zero-gap structure Z is preferably attached to the conductive elastic body 2e by spot welding, or fixation by means of metal or plastic pins, or pressing pressure of the resilience force of the conductive elastic body 2e.

The form of the other electrode 2 paired with the electrode 2 supported by the elastic body is also important, and the other electrode 2 desirably is a planar electrode.

In general, this electrode 2 preferably has a thickness of about 0.7 mm to about 3 mm. If this thickness is too small, the electrode 2 may deform due to the pressure difference between the anode compartment 5a and the cathode compartment 5c or the pressing pressure. As a result, ends of the electrode 2 may be displaced, which may increase the inter-electrode distance, causing an increased voltage.

- Electrode compartment -

In the bipolar electrolyzer 50 according to the present embodiment, as illustrated in FIG. 2, a partition wall 1, an outer frame 3, and a membrane 4 define an electrode compartment 5 that allows passage of an electrolyte.

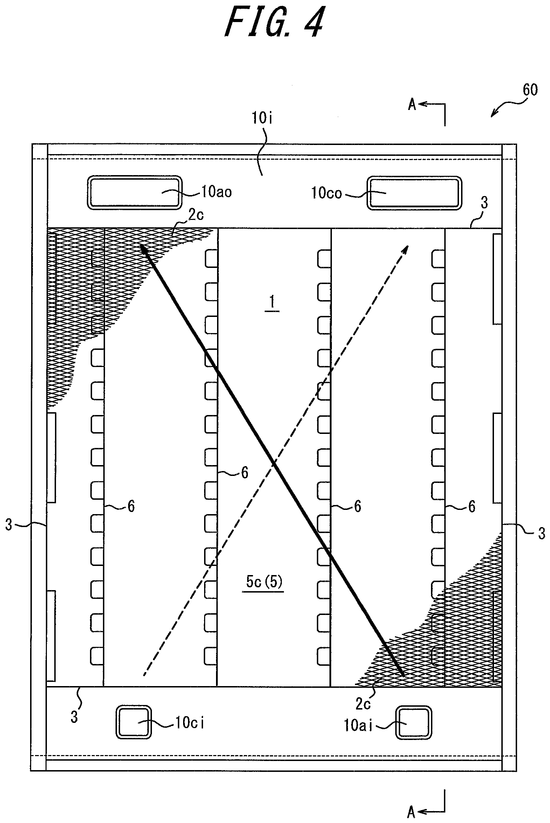

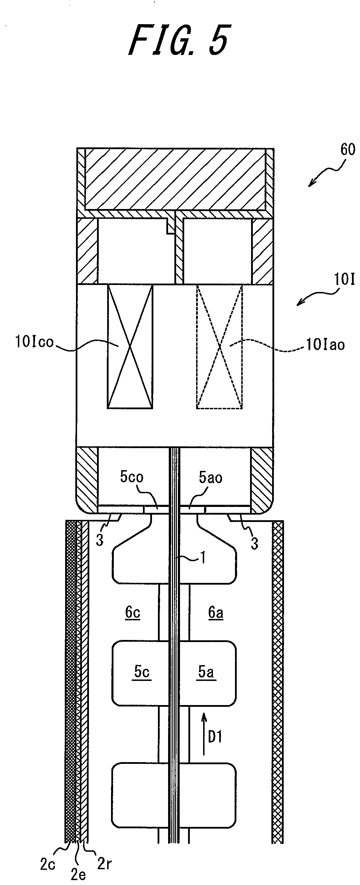

FIG. 4 is a plan view illustrating an example of an inner header type bipolar electrolyzer for alkaline water electrolysis of the present embodiment. FIG. 5 illustrates a partial cross-section of the example of the bipolar electrolyzer for alkaline water electrolysis in FIG. 4, when cut on the plane along Line A-A.

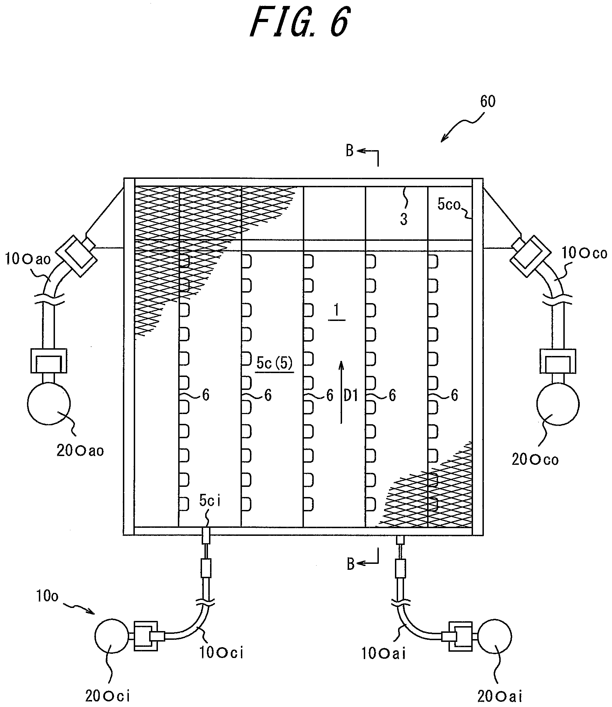

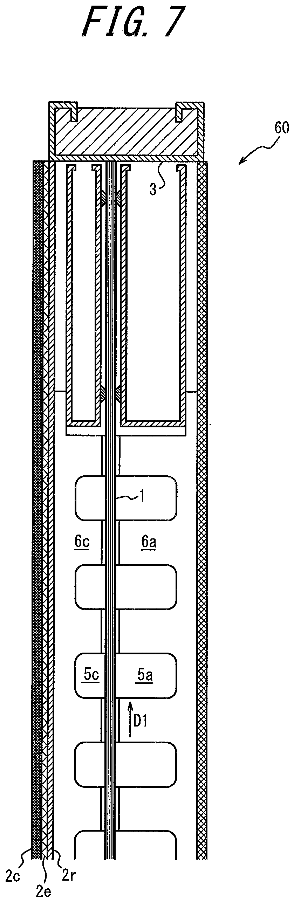

FIG. 6 is a plan view illustrating an example of an outer header type bipolar electrolyzer for alkaline water electrolysis of the present embodiment. FIG. 7 illustrates a partial cross-section of the example of the bipolar electrolyzer for alkaline water electrolysis in FIG. 6, when cut on the plane along Line B-B.

In the present embodiment, the headers 10 of the bipolar electrolyzer are disposed as either internal header 10I (see FIGS. 4 and 5) type or external header 100 (see FIGS. 6 and 7) type. For example, in the examples in FIGS. 4-7, the space occupied by the anode and the cathode can be considered as the space inside the electrode compartment 5. In addition, particularly in the example in FIGS. 6 and 7 provided with a gas-liquid separation box, the space occupied by the gas-liquid separation box can also be considered as the inside of the electrode compartment 5.

- Flow rectifier -

In the bipolar electrolyzer 50 for alkaline water electrolysis of the present embodiment, preferably, flow rectifiers 6 (anode flow rectifier 6a and/or cathode flow rectifier 6c) are provided to a partition wall 1, and are in physical contacts with the respective electrodes 2. In this configuration, the flow rectifiers 6 serve as supports (ribs) for the electrodes 2, making it easier to maintain the zero-gap structure Z. It is also preferable that the flow rectifiers 6 are electrically connected to the partition wall 1. The provision of the flow rectifiers 6 can reduce convections in the electrolysis compartment 5 caused by disturbances of flows of gases and liquid, thereby suppressing local temperature elevations of the electrolyte.

Here, an electrode 2 may be disposed to a flow rectifier 6, or a current collector 2r, a conductive elastic body 2e, and an electrode 2 may be disposed to a flow rectifier 6, in this order.

In the bipolar electrolyzer 50 for alkaline water electrolysis of the above-described example, a cathode compartment 5c has a structure such that a flow rectifier 6, a current collector 2r, a conductive elastic body 2e, and an electrode 2 are overlapped one another in this order, and an anode compartment 5a has a structure such that a flow rectifier 6 and an electrode 2 are overlapped in this order.

It is to be noted that the present disclosure is not limited to the above-described bipolar electrolyzer 50 for alkaline water electrolysis described above, a cathode compartment 5c adopts a structure of "flow rectifier 6 - current collector 2r - conductive elastic body 2e - electrode 2" and an anode compartment 5a adopts a structure of "flow rectifier 6 - electrode 2". Alternatively, the anode compartment 5a may have a structure of "flow rectifier 6 - current collector 2r - conductive elastic body 2e - electrode 2".

Specifically, in the present embodiment, as illustrated in FIG. 1 flow rectifiers 6 (anode flow rectifier 6a and cathode flow rectifier 6c) are attacked to a partition wall 1.

The flow rectifiers 6 (anode flow rectifier 6a and cathode flow rectifier 6c) more preferably serve to conduct electrical current from the partition wall 1 to the anode 2a or the cathode 2c, in addition to serving to support the anode 2a or the cathode 2c.

In the bipolar electrolyzer 50 for alkaline water electrolysis of the present embodiment, preferably at least a part of the flow rectifiers 6 is conductive, and further preferably the entire flow rectifiers 6 are conductive. Such a configuration suppresses an increase in the cell voltage caused by deformation of the electrode.

In other words, the conductive flow rectifier 6 is disposed so as to support the electrode 2 in the range of the interval C described above, which prevents the electrode 2 from being deformed by the pressing force or the pressures from the liquid and gas inside the electrode compartment 5 thereby locally compromising the zero-gap structure. Further, the above-described configuration facilitates uniform conduction of electrical current over the entire electrodes 2, which contributes to maintain high efficiency even during operations under high electrical density.

The material of the flow rectifiers 6 may be determined based on the durability and the strength, for example, in the usage environment. Examples include a polymer material and a metal material, for example. Multiple materials may be used. Examples of the polymer material include polysulfone, polyethersulfone, polyphenylsulfone, polyvinylidene fluoride, polycarbonate, tetrafluoroethylene-perfluoroalkyl vinyl ether copolymer, tetrafluoroethylene-ethylene copolymer, polyvinylidene fluoride, polytetrafluoroethylene, perfluorosulfonic acid, perfluorocarboxylic acid, polyethylene, polypropylene, polyphenylene sulfide, polyparaphenylene benzobisoxazole, polyketone, polyimide, and polyetherimide, for example. Of these, polysulfone, polyethersulfone, polyphenylsulfone, polyphenylene sulfide, and polytetrafluoroethylene are preferred, and more preferred is polysulfone. As the metal material, conductive metal is preferably used. For example, nickel-plated mild steel, stainless steel, or nickel may be used. It is particularly preferable that the material of the flow rectifiers 6 is the same as that of the partition wall 1. a most preferred material of the ribs is nickel. These conductive metal materials is expected to have an effect of reducing the electrical resistance of the electrolysis cell.

The interval between adjacent anode flow rectifiers 6a and the interval between adjacent cathode flow rectifiers 6c are determined based on the electrolysis pressure and the pressure difference between the anode compartment 5a and the cathode compartment 5c, for example.

The interval C between adjacent flow rectifiers is 50 mm or more and 190 mm or less, more preferably 50 mm or more and 150 mm or less, and even more preferably 60 mm or more and 120 mm or less. If the interval between adjacent anode flow rectifiers 6a or the interval between adjacent cathode flow rectifiers 6 are too small, not only flows of the electrolyte and gas are obstructed, but also the cost is increased. If the flow rectifiers are ribs connected to the electrode, a rib pitch of 50 mm or more facilitates escape of the gas to the backside of the electrode. If the rib pitch is too large, a defect may be experienced, such as deformation of the electrode 2 (anode 2a or cathode 2c) that is supported by a small pressure difference between the anode compartment 5a and the cathode compartment 5c. The electrode becomes resistant to deformation when the pitch of the ribs is 150 mm or less.

The "rib pitch" refers to, when the multiple flow rectifiers 6 are provided at regular interval (pitch) (see FIG. 3), the interval (pitch) between the ribs. When the multiple flow rectifiers 6 are provided not at regular interval (pitch), or the rib pitch is the average of intervals between the multiple flow rectifiers 6. When the intervals of two adjacent flow rectifiers 6 vary in the direction in which the flow rectifiers 6 extend, the rib pitch may be the average of the intervals of two adjacent flow rectifiers 6.

The length of the flow rectifiers 6, the angle between a flow rectifier 6 and a partition wall 1, the number of through-holes, and interval (pitch) of the through-hole with respect to the given direction D1 along the partition wall 1 may be determined as appropriate as long as the effects of the present disclosure are obtained. The flow rectifiers are preferably provided so as to be parallel to a given direction along the partition wall (the given direction may be the vertical direction, for example). Or, when the partition wall is substantially rectangular in plan view as illustrated in FIG. 3, the given direction may extend in the direction of one pair of side of two pairs of side facing each other of the rectangle. Alternatively, the direction may be the direction opposite to the side of the electrode where inlet headers are provided and the side where outer headers are provided (see FIG. 3). The rib pitch of the anode flow rectifiers may be the same as or different from the rib pitch of the cathode flow rectifiers, and both the rib pitch of the anode flow rectifiers and the rib pitch of the cathode flow rectifiers preferably satisfy the above-described range.

The anode flow rectifiers 6a or the cathode flow rectifiers 6c may be attached to the partition walls 1 by laser welding, for example.

The length of each flow rectifier 6 (anode flow rectifier 6a or cathode flow rectifier 6c) may be determined as appropriate according to the dimension of the electrode compartment 5 and the electrode 2, and may be 0.7 to 1.0 times, is preferably 0.8 to 1.0 times, of the length A described above.

The height of each flow rectifier 6 may be determined as appropriate according to the distance from a partition wall 1 to each flange, the thickness of a gasket 7, the thickness of the electrode 2 (the anode 2a or the cathode 2c), and the distance between the anode 2a and the cathode 2c, for example, and may be 0.7 to 1.0 times, preferably 1.0 times, of the length B described above.

The thickness of each flow rectifier 6 may range from 0.5 mm to 5 mm for the reasons of the cost, easiness of fabrication, and the strength, for example, and flow rectifiers with a thickness of 1 mm to 2 mm are, but not limited to, usable.

The height of each flow rectifier 6 may be determined as appropriate according to the distance from the partition wall 1 to each flange, the thickness of a gasket 7, and the thickness of the electrode 2 (the anode 2a or the cathode 2c), and the distance between the anode 2a and the cathode 2c, for example, and may be 0.7 to 1.0 times, is preferably 1.0 times, of the length of the electrode compartment 5 in the direction orthogonal to the partition wall 1.

Each flow rectifier 6 may have, but is not limited to, through-holes provided therein, which are preferably provided at regular intervals in the direction where the flow rectifier 6 extends. The shape of the through-holes in plan view may be, but is not limited to, rectangular or circular, and may be a semi-circle having a radius of 0.5 mm to 30 mm, and particularly 0.5 mm to 10 mm. The proportion of the areas of the through-holes to the area of the flow rectifier 6 may be 5% to 95%, preferably 10% to 80%, and more preferably 20% to 60%. When the proportion of the areas of the through-holes is 5% or more, the electrolyte in the electrolyzer flows smoothly in the horizontal direction. If the ratio exceeds 95%, the mechanical strength is compromised and an anode or cathode current collector may deform.

Each flow rectifier 6 is typically secured to the partition wall 1, and the attachment to the partition wall 1 may be carried out in any method. Such method includes attachment with screws or adhesives; or may be spot welding or laser welding for flow rectifiers made from a metal material. Similarly to the anode 2a or the cathode 2c, each flow rectifier 6 is secured to the partition wall 1 with a technique, such as spot welding and laser welding. The electrode 2 and current collector 2r are attached to the flow rectifier 6 using similar techniques, or may be bound together using a wire or a string-like member to bring them into a close contact together.

- Gasket -

In the bipolar electrolyzer 50 for alkaline water electrolysis of the present embodiment, a gasket 7 having a membrane 4 is preferably sandwiched between the outer frames 3 bordering the partition wall 1.

The gasket 7 is used for providing a seal against the electrolyte and generated gases between the bipolar element 60 and the membrane 4 and between the bipolar elements 60, and to prevent leakage of the electrolyte and the generated gases to the outside of the electrolyzer and intermixing of the gases between the bipolar compartments.

The gasket 7 has typically a quadrangular or annular shape obtained by hollowing out the electrode surface in conformity with the surface of the element (such as a bipolar element, an anode terminal element, or a cathode terminal element) contacting the frame body. A membrane 4 can be stacked between elements by sandwiching the membrane with two such gaskets. Furthermore, the gasket 7 is provided with a slit for receiving a membrane 4 therein so as to be able to hold the membrane 4, and the gasket 7 is preferably further provided with an opening which allows the received membrane 4 to be exposed on both surfaces of the gasket 7. In this way, the gasket 7 can receive the edge portion of the membrane 4 in the slit and cover the edge faces of the ends of the membrane 4. This configuration can more reliably prevent leakage of the electrolyte or gas from the edge faces of the membrane 4.

The gasket 7 is preferably provided with a protrusion protruding from either one of the surfaces of the gasket 7. The protrusion is locally pressed when elements are stacked, and the membrane 4 received in the slit is pressed by the gasket 7 at the location corresponding to the protrusion. This reinforces holding of the membrane 4 by the gasket 7, and prevents leakage of the electrolyte and the gases more effectively.

The material of the gasket 7 is not particularly limited, and known rubber and resin materials, for example, having insulation properties may be selected.

Specific examples of such rubber and resin materials include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutylene-isoprene rubber (IIR), urethane rubber (UR), and chlorosulfonated polyethylene rubber (CSM); fluoro resin materials such as polytetrafluoroethylene (PTFE), tetrafluoroethylene/perfluoroalkyl vinyl ether copolymer (PFA), tetrafluoroethylene-ethylene copolymer (ETFE), chlorotrifluoroethylene/ethylene copolymer (ECTFE); and resin materials such as polyphenylene sulfide (PPS), polyethylene, polyimide, and polyacetal. Of these, ethylene-propylene-diene rubber (EPDM) and fluororubber (FR) are particularly preferable from the perspective of elastic modulus and alkali resistance.

The gasket 7 may have the reinforcer embedded therein. This prevents the gasket 7 from being collapsed when the gasket 7 is pressed by the frame when elements are stacked, which prevents damages more effectively.

The reinforcer may be made from any of known metallic, resin, and carbon materials, for example, and specifically examples include metals, e.g., nickel and stainless steel; resin materials, e.g., nylon, polypropylene, PVDF, PTFE, and PPS; and carbon materials, e.g., carbon particles and carbon fibers.

Preferred reinforces are reinforces of a woven fabric, a non-woven fabric, a short fiber, and a porous membrane. A protection layer may be provided on a surface of the gasket 7. It can improve adhesion of the gasket 7 to elements and increase the alkali resistance of the gasket 7. The material of the protection layer may be selected from the material of the gasket 7.

The size of the gasket 7 is not particularly limited and can be designed according to the dimension of the electrode compartment 5 and the membrane, yet the width may be 10 mm to 40 mm.

The thickness of the gasket 7 is not particularly limited and can be designed according to the material and the elastic modulus of the gasket 7 and the cell area. The gasket 7 has a thickness ranging preferably 0.5 mm or more and 10 mm or less, more preferably from 1.0 mm to 10 mm, and even more preferably from 3.0 mm to 10 mm.

When a protrusion is provided, the height of the protrusion preferably is, but not particularly limited to, 0.5 mm to 5 mm for providing an sufficient pressing force.

The elastic modulus of the gasket 7 is not particularly limited and can be designed according to the material of the electrode 2 and the area of the cell. The elastic modulus as the tensile stress at 100% deformation preferably ranges from 0.20 MPa to 20 MPa, more preferably from 0.5 MPa to 15 MPa, and even more preferably from 1.0 MPa to 10 MPa, from the perspectives of the sealing characteristic and the cell strength when the cells are stacked.

The tensile stress can be measured in accordance with JIS K 6251. For example, Autograph AG available from Shimadzu Corporation may be used for the measurement.

Particularly in the present embodiment, the gasket 7 preferably has a thickness from 3.0 mm to 10 mm and a tensile stress at 100% deformation from 1.0 MPa to 10 MPa, from the perspectives of suppression of an increase in the cell voltage caused by deformation of the electrode, the sealing characteristic, and the cell strength when the cells are stacked.

For attaching the gasket 7 to the bipolar element 60, an adhesive may be used. The adhesive is applied on one surface of the gasket 7 to attach the gasket 7 to one of outer frames 3 of the element. After the adhesive is dried, the electrodes 2 are preferably maintained to be moist by sprinkling water on the surfaces of the electrodes in the bipolar element 60. In the case of a gasket 7 provided with a slit for receiving the edge of a membrane 4 for holding the membrane 4, the gasket 7 having the membrane 4 received therein may be adhered to the bipolar element 60, or the membrane 4 may be held to the bipolar element 60 after the gasket 7 is adhered to the bipolar element 60.

- Header -

The bipolar electrolyzer 50 for alkaline water electrolysis comprises a cathode compartment 5c and an anode compartment 5c of each electrolytic cell 65. In order to conduct the electrolysis reaction continuously in the electrolyzer 50, it is necessary to continuously supply an electrolyte containing sufficient amounts of the raw materials consumed in electrolysis to the cathode compartment 5c and the anode compartment 5a of each electrolysis cell 65.

Each electrolytic cell 65 is connected to an electrolyte supply/discharge plumbing system, called headers 10, which are shared by a plurality of electrolytic cells. In general, the liquid dispensing pipe for anodes is referred to as an anode inlet header 10ai, the liquid dispensing pipe for cathodes is referred to as a cathode inlet header 10ci, the liquid collection pipe for anodes is referred to as an anode outlet header 10ao, and the liquid collection pipe for cathodes is referred to as a cathode outlet header lOco. Each electrolysis cell 65 is connected to the electrolyte dispensing pipes and the electrolyte collection pipes through hoses or the like.

Although the material of the headers 10 is not particularly limited, it is necessary to adopt those which can withstand corrosive properties of the electrolyte to be used, operating conditions such as pressure and temperature, and so on. The material of the headers 10 may be iron, nickel, cobalt, PTFE, ETFE, PFA, polyvinyl chloride, or polyethylene.

In the present embodiment, the range of the electrode compartment 5 may vary according to the detail of the structure of the outer frame 3 to be provided at the outer end of the partition wall 1, and the detail of the structure of the outer frame 3 may vary depending on the manner how to attach the headers 10 (tubes for dispensing or collecting the electrolyte) to the outer frame 3. The headers 10 attached to the bipolar electrolyzer 50 are typically disposed as internal headers 101 or external headers 10O.

- Internal header -

The "internal header type 101" refers to a type in which a bipolar electrolyzer and headers (pipes for dispensing or collecting an electrolyte) are integrated.

In a bipolar electrolyzer 50 in the inner header 101 type, more specifically, an anode inlet header 101ai and a cathode inlet header 101ci are provided at a lower portion inside the partition wall 1 and/or the outer frame 3 so as to extend in the direction orthogonal to the partition wall 1. In addition, an anode outlet header 10Iao and a cathode outlet header 10Ico are provided at an upper portion inside the partition wall 1 and/or the outer frame 3 so as to extend in the direction orthogonal to the partition wall 1.

The anode inlet header 101ai, the cathode inlet header 101ci, the anode outlet header 10Iao, and the cathode outlet header 10Ico that are internally provided in the bipolar electrolyzer 50 in the inner header 101 type are collectively referred to as the "inner headers 10I".

In the example of the inner header 101 type illustrated in FIGS. 4 and 5, the anode inlet header 101ai and the cathode inlet header 101ci are provided at a part of a lower portion of the outer frame 3 at the edge of the partition wall 1. Similarly, the anode outlet header 10Iao and the cathode outlet header 101co are provided at a part of an upper portion of the outer frame 3 at the edge of the partition wall 1. The outer frame 3 is connected to the anode compartments 5a or the cathode compartments 5c, via respective electrolyte inlets 5i or electrolyte outlets 5o that allow passage of the electrolyte.

- External header -

The external header type 10O refers to a type in which a bipolar electrolyzer 50 and headers 10 (pipes for dispensing or collecting electrolyte) are separate.

In a bipolar electrolyzer 50 in the external header type 10O, an anode inlet header 10Oai and a cathode inlet header 10Oci are separately provided such that they run in parallel to the electrolyzer 50 in a direction perpendicular to the current-carrying surface of the electrolysis cell 65. The anode inlet header 10Oai and the cathode inlet header 10Oci are connected to electrolysis cells 65 via respective hoses.

The anode inlet header 10Oai, the cathode inlet header 10Oci, the anode outlet header 10Oao, and the cathode outlet header 10Oco that are externally connected to the bipolar electrolyzer 50 in the outer header 10O type are collectively referred to as the "outer headers 10O".

In the example of the outer headers 10O type illustrated in FIGS. 6 and 7, tubular members are provided to through-holes for the headers 10 at a lower portion of the outer frame 3 at the end of a partition wall 1, and the tubular members are connected to the anode inlet header 10Oai or the cathode inlet header 10Oci. Similarly, tubular members (e.g., hoses or tubes, for example) are provided to through-holes for the headers 10 at an upper portion of the outer frame 3 at the end of a partition wall 1, and the tubular members are connected to the anode outlet header 10Oao or the cathode outlet header 10Oco.

It is noted that the bipolar electrolyzer 50 in the inner header type 101 or the outer header type 10O may have a gas-liquid separation box for separating the gas generated by electrolysis from the electrolyte. The attachment position of the gas-liquid separation box is not particularly limited, yet it may be installed between the anode compartment 5a and the anode outlet header 10ao, or between the cathode compartment 5c and the cathode outlet header 10co.

The surfaces of the gas-liquid separation box may be coated with a coating material that can withstand corrosiveness of the electrolyte to be used, operating conditions such as the pressure and the temperature, and so on. Insulating coating materials may be adopted for increasing the electric resistance against the leak current circuit inside the electrolyzer. As the coating material, EPDM, PTFE, ETFE, PFA, polyvinyl chloride, and polyethylene, for example, may be adopted.

Particularly, for suitably achieving the effects of the present embodiment, the electrolyzer of the present embodiment preferably is a bipolar electrolyzer comprising a plurality of flow-adjustment vanes that are arranged so as to be parallel to each other in an electrode compartment defined by a membrane being in contact with an anode and a cathode form a zero gap structure, and has characteristics, in combination, in that: a plurality of flow rectifiers are arranged so as to be parallel to each other in each electrode compartment; a length A of each electrode compartment in a given direction, a length B of the electrode compartment in the direction orthogonal to the partition wall, an interval C between the plurality of flow rectifiers, and a cross-sectional area D of the electrode compartment on a plane orthogonal to the given direction are set within the aforementioned ranges; and a distance between the anode and/or a current collector and the cathode and/or a current collector, and/or a distance between the cathode and the anode current collector, a density of the conductive elastic bodies, and a surface pressure being applied between the membrane and the cathode are set within the aforementioned ranges.

(Electrolysis device for alkaline water electrolysis)

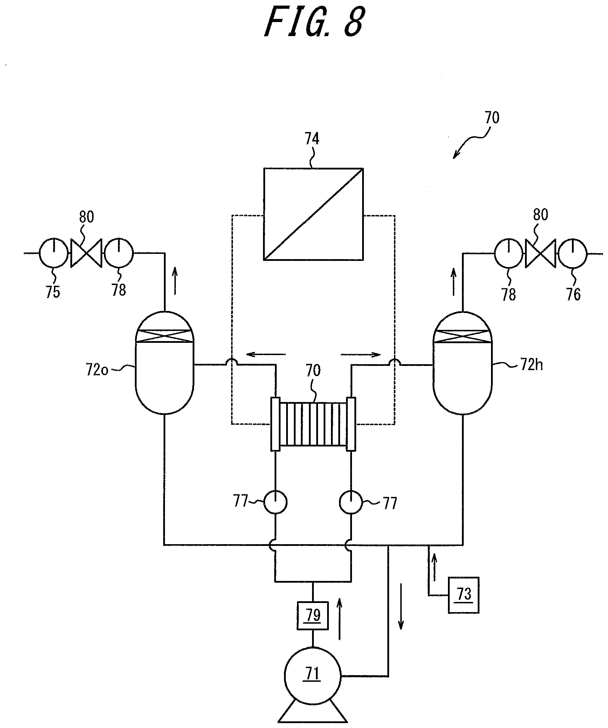

FIG. 8 illustrates the outline of an electrolysis device for alkaline water electrolysis of the present embodiment.

The electrolysis device for alkaline water electrolysis 70 of the present embodiment include the bipolar electrolyzer 50 of the present embodiment, a tubing pump 71 to circulate the electrolyte, gas-liquid separation tanks 72 to separate the electrolyte from hydrogen and/or from oxygen, and a water replenisher 73 to replenish water consumed by electrolysis.

In accordance with the electrolysis device 70 for alkaline water electrolysis of the present embodiment, the effects of the bipolar electrolyzer for alkaline water electrolysis of the present embodiment are provided.

In other words, in accordance with the present embodiment, upon alkaline water electrolysis in an operation in a high current density or an operation utilizing a variable power source, an increase in the temperature of an outlet of an electrolysis compartment 5 is reduced, and accordingly an increase in the temperature of the electrolyte is suppressed. As a result, convections caused in the electrolysis compartment 5 by disturbances of flows of gases and liquid in electrolysis compartment 5 are reduced, thereby suppressing a local temperature elevations of the electrolyte.

The following provides a description of details of the components of the electrolysis device 70 for alkaline water electrolysis of the present embodiment.

- Tubing pump -

The tubing pump 71 used in the present embodiment is not particularly limited, and may be appropriately determined.

- Gas-liquid separation tank -

The gas-liquid separation tanks 72 used in the present embodiment include a hydrogen separation tank 72h for separating the electrolyte from hydrogen, and an oxygen separation tank 72o for separating the electrolyte from oxygen.

The hydrogen separation tank 72h is connected to the cathode compartments 5c, and the oxygen separation tank 72o is connected the anode compartments 5a, for usage.

- Water replenisher -

The water replenisher 73 used in the present embodiment is not particularly limited, and may be appropriately determined.

As water, general tap water may be used, yet ion-exchanged water, RO water, or ultrapure water is preferably used for long-term operations.

- Miscellaneous -

The electrolysis device 70 for alkaline water electrolysis of the present embodiment may further comprise other components such as a rectifier 74, an oxygen concentration meter 75, a hydrogen concentration meter 76, flow meters 77, pressure gauges 78, a heat exchanger 79, and pressure control valves 80, in addition to the bipolar electrolyzer 50, the gas-liquid separation tanks 72, and the water replenisher 73.

An electrolysis device for alkaline water electrolysis 70 configured as illustrated in FIG. 6 may be fabricated using components of the above-described electrolysis device for alkaline water electrolysis 70 in the present embodiment, yet this is not limitative.

(Alkaline water electrolysis method)

A water electrolysis method of the present embodiment comprises: performing electrolysis using the electrolysis device 70 of the present embodiment by circulating an electrolyte such that the Reynolds number of the electrolyte calculated from the following formula (3) is 10 to 1800:

$$\text{Formula (3): } Re = Q \ / \ (\text{a number of flow rectifiers per electrode compartment} + 1) \times \{(2 \times D) \ / \ (B + C)\} \ / \ (\nu \times D),$$

where Q is a flow rate (m$^3$/second) of the electrolyte per electrode compartment, and $\nu$ is the kinematic viscosity (m$^2$/second) of the electrolyte.

A, B, C, and D in Formula (3) are values determined for the bipolar electrolyzer 50 of the present embodiment. Specifically, A is the length of the electrode compartment 5 in the given direction D1 along the partition wall 1. B is the length of the electrode compartment 5 in the direction orthogonal to the electrode 2. C is the interval between the multiple flow rectifiers 6. D is the cross-section of the electrode compartment 5 on a plane orthogonal to the given direction D1 along the partition wall 1, and is represented by B × C.

The preferred ranges of A, B, C, and D may be the ranges specified above for the bipolar electrolyzer 50 of the present embodiment. In other words, the flow rate Q of the electrolyte per electrode compartment may be controlled according to the selections of A, B, C, and D of the electrolysis cell such that the Reynolds number Re of the electrolyte is within the range of 10 to 1800.

In accordance with the alkali water electrolysis method of the present embodiment, the effects of the electrolysis device 70 for alkaline water electrolysis of the present embodiment are provided.

In other words, in accordance with the present embodiment, upon alkaline water electrolysis in an operation in a high current density or an operation utilizing a variable power source, an increase in the temperature of an outlet of an electrolysis compartment 5 is reduced, and accordingly an increase in the temperature of the electrolyte is suppressed. As a result, convections caused in the electrolysis compartment 5 by disturbances of flows of gases and liquid in electrolysis compartment 5 are reduced, thereby suppressing a local temperature elevations of the electrolyte. In addition, pressure fluctuations caused by fluctuations in the gas-liquid ratio are also suppressed.

The electrolyte that can be used in the present embodiment may be an alkaline aqueous solution containing an alkali salt dissolved therein, and examples include NaOH aqueous solution and KOH aqueous solution, for example.

The concentration of the alkali salt ranges, but is not limited to, preferably from 20% by mass to 50% by mass, and more preferably from 25% by mass to 40% by mass.

Of these, KOH aqueous solution ranging from 25% by mass to 40% by mass is particularly preferable from the perspectives of the ionic conductivity, the kinematic viscosity, and the freezing behavior at freezing temperatures.

In the alkaline water electrolysis method of in the present embodiment, the flow rate Q of the electrolyte per electrode compartment is controlled according to the size of the electrode compartment 5 from the perspective of enhancing the effects of the present disclosure, yet the flow rate Q of the electrolyte per electrode compartment ranges preferably from $1 \times 10^{-7}$ m$^3$/second to $1 \times 10^{-2}$ m$^3$/second, and more preferably from $1 \times 10^{-6}$ m$^3$/second to $1 \times 10^{-3}$ m$^3$/second.

The kinematic viscosity v of the electrolyte is determined by the type, the concentration, and the temperature of the electrolyte.

In the alkaline water electrolysis method of in the present embodiment, the temperature of the electrolyte in the electrolysis cell 65 ranges preferably from room temperature to 150°C, and further preferably from 80°C to 130°C.

The above temperature range effectively suppresses thermal degradation of the members in the electrolysis device 70, including the gaskets 7 and the membranes 4, as well as maintaining high electrolysis.

In the alkaline water electrolysis method of the present embodiment, the current density provided to the electrolysis cell 65 may be typically 30 kA/m$^2$ or less. The electrolysis may be carried out in a constant current density operation or a varied current density operation.

In the alkaline water electrolysis method of in the present embodiment, the pressure inside the electrolysis cell 65 may be within a designed pressure range of the electrolysis cell.

(Hydrogen production method)

The hydrogen production method according to the present embodiment includes performing electrolysis of water containing alkali with an electrolyzer to produce hydrogen, and may be carried out using the electrolyzer of the present embodiment, the electrolysis device of the present embodiment, and the water electrolysis method of the present embodiment.

The electrolyzer comprises a plurality of bipolar elements overlapped one another with a membrane interposed therebetween, each bipolar element comprising an anode, a cathode, a partition wall separating the anode from the cathode, and an outer frame bordering the partition wall, the membrane being in contact with the anode and the cathode; and a plurality of flow rectifiers that are arranged so as to be parallel to each other in electrode compartments so as to be parallel to a given direction along the partition wall, each electrode compartment being defined by the partition wall, the outer frame, and the membrane. Such an electrolyzer may form a zero-gap structure.

In the electrolyzer, a length A of the electrode compartment in the given direction is 0.40 m or more and 4.0 m or less, a length B of the electrode compartment in the direction orthogonal to the partition wall is 0.0030 m or more and 0.030 m or less, and an interval C between the plurality of flow rectifiers is 0.050 m or more and 0.19 m or less.

The details of the electrolyzer of the present embodiment, the electrolysis device of the present embodiment, and the water electrolysis method of the present embodiment are as described above.

Although the bipolar electrolyzer for alkaline water electrolysis, the alkaline water electrolysis device, and the alkaline water electrolysis method of embodiments of the present disclosure have been descried with reference to the drawings, they are not limited to the above examples and the above-described embodiments may be modified as appropriate.

EXAMPLES

The present disclosure will be described hereinafter in more detail with reference to Examples

(Example A1)

In Example A1, alkaline water electrolysis was conducted using a model electrolyzer in which flows of gases generated during the water electrolysis were visible, as described below.

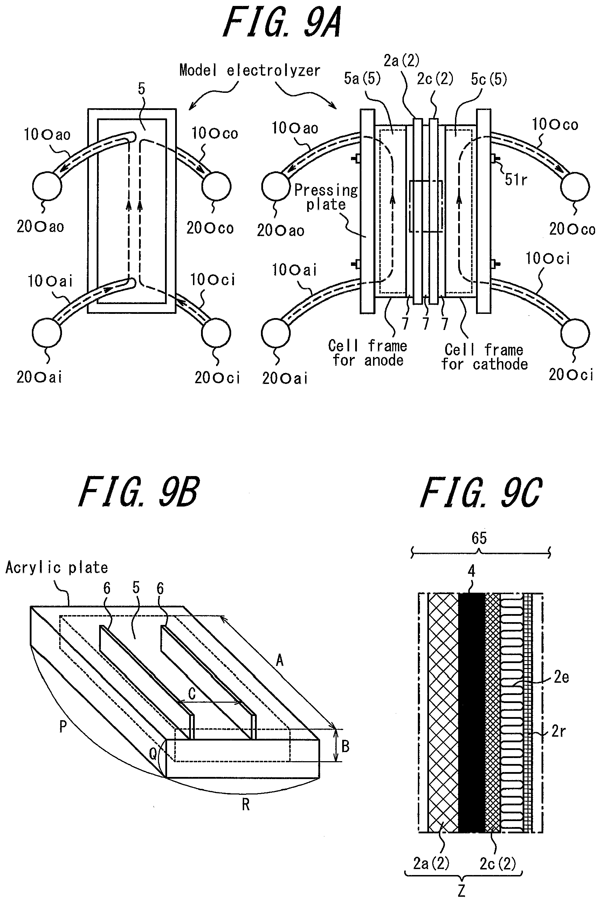

The model electrolyzer was fabricated as follows. FIG. 9 illustrates the outline of the electrolyzer of Examples A. where (A) is a front view (left) and a side view (right) of the model electrolyzer, (B) is a perspective view of an acrylic plate in which electrode compartments in the model electrolyzer were formed, and (C) illustrates a zero-gap structure in the model electrolyzer.

- Partition walls, outer frame, and flow rectifiers -

As partition walls and outer frames 3 for fabricating the model electrolyzer, cell frames made of a transparent material (acryl) to allow for visual observation of the interior of the electrolysis cell.

Initially, acrylic plates having a thickness Q of 75 mm, a lateral length R of 300 mm, and a longitudinal length P of 1.45 m or 2.65 m, were provided.

Next, as illustrated in FIG. 9 (B), a recess (of a certain depth, a lateral length of 250 mm, and a certain longitudinal length) was provided in the acrylic plate by removing the material of the acrylic plate from one side of the acrylic plate to define electrode compartment, thereby preparing a box-shaped cell frame with desired dimensions of the length A and the length B as desired.

For example, in an example with the length A of 1.2 m, an acrylic plate of a longitudinal length P of 1.45 m was used. In another example with the length A of 2.4 m, an acrylic plate of a longitudinal length P of 2.65 m was used. In either case, the electrode compartment was created so as to be positioned at the center of the acrylic plate in plan view.

Then, two to four acrylic plates having a thickness of 3 mm were provided as flow rectifiers at desired interval C along the direction of the lateral length R. The two to four flow rectifiers were provided symmetrical to the center in the direction of the lateral length R of the electrode compartment. The flow rectifiers were spaced apart by 100 mm in the direction of longitudinal length P from the ends of in the direction where the electrode compartment extended.

- Anode -

As an anode, a nickel-expanded metal substrate that had been subjected to blasting in advance was used, and granulated products of nickel oxide were sprayed onto both surfaces of a conductive substrate by a plasma spraying method to produce the anode.

The dimension of the anode was made to be the same as that of the electrolysis compartment.

(Cathode)

A plain weave mesh-type substrate of nickel thin wires of a diameter of 0.15 mm woven into #40 mesh was used as a conductive substrate. The thickness of the cathode was 0.3 mm.

The dimension of the cathode was made to be the same as that of the electrolysis compartment.

- Membrane -

Zirconium oxide (trade name "EP Zirconium Oxide", from Daiichi Kigenso Kagaku Kogyo Co., Ltd.) and N-methyl-2-pyrrolidone (from Wako Pure Chemical Industries, Ltd.) were put into a ball mill pot containing SUS balls with a particle size of 0.5 mm. These were stirred together at a rotation speed of 70 rpm for 3 hours and dispersed to obtain a mixture. The resulting mixture was filtered through a stainless steel mesh (mesh count: 30 mesh) to separate the balls from the mixture. Polysulfone (Udel@ from Solvay Advanced Polymers, Udel is a registered trademark in Japan, other countries, or both) and polyvinylpyrrolidone (from Wako Pure Chemical Industries, Ltd., weight-average molecular weight (Mw): 900,000) were added to the mixture from which the balls had been separated, and stirred with a three-one motor for 12 hours and dissolved to obtain a coating liquid having the following composition:

polysulfone: 15 parts by mass
polyvinylpyrrolidone: 6 parts by mass
N-methyl-2-pyrrolidone: 70 parts by mass

zirconium oxide: 45 parts by mass

The coating liquid was applied to both surfaces of a polyphenylene sulfide mesh (from Clever Co., Ltd., film thickness: 280 $\mu$m, mesh opening: 358 $\mu$m, and fiber diameter: 150 $\mu$m) as a substrate using a comma coater to obtain a coating thickness of 150 $\mu$m per surface. Immediately after the coating, the substrate coated with the coating liquid was exposed to vapor from the coagulation bath stored with a pure water/isopropanol mixed solution at 30°C (a solution of pure water/isopropanol = 50/50 (v/v) from Wako Pure Chemical Industries, Ltd.). Immediately thereafter, the substrate coated with the coating liquid was immersed in the coagulation bath. Then, by coagulating polysulfone, a coating film was formed on the surface of the substrate. Thereafter, the coating film was thoroughly rinsed with pure water to obtain a porous membrane.

A porous membrane having an average water permeation pore size of 0.2 $\mu$m, a thickness of 500 $\mu$m, and a porosity of 50% was obtained by controlling time to expose to vapor and time to immense in the coagulation bath to control the average water permeation pore size and the porosity.

In Example A1, as illustrated in FIG. 9 (A), a pressingplate, a cell frame for an anode, a gasket 7, an anode 2a, a gasket 7 holding a membrane 4, a cathode 2c, a gasket 7, a cell frame for the cathode, and a pressing plate were arranged in this order from one end to the other end, and they were tightened together with tie rods 51r from the two surfaces of pressing plates, thereby fabricating the model electrolyzer.

- Electrolysis compartment -

As described above, in Examples A, the recess created by removing the material of the acrylic plate was used as an electrode compartment, as illustrated in FIG. 9 (B), for the purpose of better understanding of the effects of the present disclosure.

The length A of the electrode compartment in the electrolyte passage direction and the length B of the electrode compartment in the direction orthogonal to the partition wall were specified as listed in Table 1.

- Gasket -

Gaskets made of EPDM rubber and had an elastic modulus at 100% deformation of 4 MPa were used.

The gaskets inserted between the cell frame and the electrodes had a thickness of 4.0 mm, and had an aperture sized to match the size of the electrode compartment in the acrylic cell frame in plan view.

Particularly, the gasket inserted between the anode and the cathode had a thickness of 4.0 mm, had an aperture sized to match the size of the electrode compartment in the acrylic cell frame in plan view, and also had a slit structure in a width of 0.4 mm for receiving a membrane at a center part in the direction along the thickness of the inner wall of the aperture.

- Zero gap structure -

In the model electrolyzer, as illustrated in FIG. 9 (C), a cathode and a anode were stacked having interposing a gasket holding a membrane interposed therebetween. As a result, the cathode and the anode were pressed against the membrane from the surfaces of the cathode and the anode such that the cathode and the anode were brought into contact with the membrane, thereby defining a zero-gap structure Z.

Only the anode was used on the anode side, whereas a combination of "cathode - conductive elastic body - current collector" was used on the cathode side.

As the anode, the above-described anode was used. As the current collector, a nickel expanded-type substrate that had been subjected to blasting was used. The thickness of the substrate was 1 mm and the aperture ratio was 54%. The above-described cathode was used as the cathode, and as the conductive elastic body, a woven metal fabric of nickel wires having a wire diameter of 0.15 mm corrugated so as to have a corrugation height of 5 mm, was used. The thickness was 5 mm, and the repulsive force at 50% compressive deformation was 150 g/cm$^3$. The mesh opening was about 5 mesh, and the density was 0.708 g/cm$^3$. The conductive elastic body was secured by spot-welding on the cathode current collector. In this case, a zero-gap structure was formed in which the distance 'a' between an anode and a cathode current collector having the membrane interposed therebetween was 1 mm, and the membrane was in contact with the anode and the cathode to form the zero-gap structure. The surface pressure was 29.4 kN/m$^2$.

- Header (outer header) -

In the model electrolyzer having a zero-gap structure Z, as illustrated in FIG. 9 (A), to an acrylic cell frame which served as a casing of the model electrolyzer, hoses (anode inlet side hose 10Oai, anode outlet side hose 10Oao, cathode inlet side hose 10Oci, and cathode outlet side hose 10Oco) for allowing passage of an electrolyte were attached externally to fabricate an outer header type electrolyzer.

The electrolyte was made to flow by introducing it to the cathode compartment 5c via the cathode inlet side hose 10Oci, and by discharging it from the cathode compartment 5c via the cathode outlet side hose 10Oco.

The electrolyte was also made to flow by introducing it to the anode compartment 5a via the anode inlet side hose 10Oai, and by discharging it from the anode compartment 5a via the anode outlet side hose 10Oao.

Because the inlet side hoses were connected to a center of the lower part of the cell frame and the outlet side hoses were connected to a center of the upper part of the cell frame, the electrolyte flowed upward from the bottom in the vertical direction, to elevate on the electrode surfaces.

The model electrolyzer was structured such that the electrolyte was introduced from the inlet side hoses of the anode compartment 5a and the cathode compartment 5c to the anode compartment 5a and the cathode compartment 5c, respectively, and the electrolyte and evolved gases were discharged from the outlet side hoses of the anode compartment 5a and the cathode compartment 5c, out of the electrolyzer, respectively.

Since electrolysis produced hydrogen gas in the cathode compartment 5c and oxygen gas in the anode compartment 5a, there were formed a mixed-phase flow of the electrolyte and the hydrogen gas in the cathode-side outlet hose 10Oco and a mixed-phase flow of the electrolyte and the oxygen gas in the anode-side outlet hose 10Oao.

A rectifier, an oxygen concentration meter, a hydrogen concentration meter, a pressure gauges, a rectifier, a tubing pump, gas-liquid separation tanks, and a water replenisher, for example, which were commonly used in the technical field, were used to fabricate an electrolysis device for alkaline water electrolysis (see FIG. 8).

Alkaline water electrolysis using the model electrolyzers was conducted in the following conditions.

As electrolyte, 30% KOH aqueous solution was used.

Current was supplied to the areas of the cathode and the anode in the model electrolyzer by the rectifier to the model electrolyzer at a current density of 10 kA/m$^2$. In Examples A and Comparative Examples A, 3.0 kA was supplied to electrode areas of 250 mm $\times$ 1200 mm, and 6.0 kA was supplied to electrode areas of 250 mm $\times$ 2400 mm.

The viscosity at 90°C of the electrolyte was determined using Brookfield Viscometer HB DV2T available from EKO INSTRUMENTS CO., LTD., and the kinematic viscosity v (m$^2$/second) of the electrolyte was then calculated using the density at 90 C.

The flow rate Q (m$^3$/second) of the electrolyte per electrode compartment was measured using a magnetic flowmeter AXF025 available from Yokogawa Electric Corporation.

The Reynolds number Re of the electrolyte was calculated from the following equation (1):

$$\text{Formula (1): Re} = Q \ / \ (\text{the number of flow rectifiers per electrode compartment} + 1) \times \{(2 \times D) / (B + C)\} / (v \times D)$$

(where Q is a flow rate (m$^3$/second) of the electrolyte per electrode compartment, and v is the kinematic viscosity (m$^2$/second) of the electrolyte)

The temperature of the electrolyte was measured at the inlets of the model electrolyzer using a type K thermocouple.

The pressure in the electrolyzer after the start of energization was measured with each pressure gauge and adjusted such that the anode-(hydrogen-) side pressure became 3 kPa and the cathode- (oxygen-) side pressure became 2 kPa. The pressure was adjusted by adjusting the level of water stored in the water sealer provided downstream to the pressure gases.

During electrolysis, a tubing pump made the electrolyte to circulate through the anode compartment, the gas-liquid separation tank for anode, and the anode compartment in the model electrolyzer, and also through the cathode compartment, the gas-liquid separation tank for cathode, and the cathode compartment in the model electrolyzer.

Nickel pipes of 15A diameter were used for circulation routes contacting the electrolyte.

The gas-liquid separation tanks used had a height of 500 mm and a capacity of 0.016 m$^3$.

Liquids were filled to the gas-liquid separation tanks up to about 50% of their designed capacities.

Detailed conditions of alkaline water electrolysis in Examples A and Comparative Examples A are listed in Table 1.

The alkaline water electrolysis in Examples A and Comparative Examples A was evaluated as follows. The evaluations were made after 60 minutes from the start of energization.

The results of the evaluations in Examples A and Comparative Examples A are listed in Table 1.

(1) Gas accumulation

For evaluating accumulation of liquid and gases in the electrolysis cell during the electrolysis, the frequency of backmixing in the electrode compartments in the model electrolyzer was visually inspected and evaluated according to the following evaluation grades. The results are listed in Table 1.

<Evaluation grades>

A (Excellent): Backmixing occurred less frequently, and vanished within several seconds;
B (Good): Backmixing occurred frequently, but vanished within several seconds;
C (Acceptable): Backmixing occurred frequently, and lasted 5 minutes or longer; and
D (Poor): Backmixing occurred constantly, and did not vanish.

(2) In-cell temperature difference

The temperature of the electrolyte was measured during the electrolysis with six thermocouples placed at regular intervals at upper and lower sections in the electrode compartments in the bipolar element in the electrolysis cell, and the maximum temperature differences of the six points were determined. The maximum temperature differences were evaluated according to the following evaluation grades. The results are listed in Table 1.

<Evaluation grades>

A (Excellent): The maximum temperature difference was less than 4°C;
B (Good): The maximum temperature difference was 4°C or more and less than 25°C;
C (Acceptable): The maximum temperature difference was 25°C or more and less than 50°C; and
D (Poor): The maximum temperature difference was 50°C or more.

(3) Pressure fluctuation caused by fluctuation of gas-liquid ratio

To evaluate pressure fluctuations, the status flows of the liquid and gases phases inside the cathode-side outlet hose were visually observed. The results are listed in Table 1.

<Evaluation grades>

A (Excellent): The two phases were separated in a stratified flow and continuous flows were observed;
B (Good): The two phases were separated in a wavy flow and continuous flows were observed;
C (Acceptable): The two phases were not separated in a slug flow, and intermittent flows were observed; and
D (Poor): Intermittent flows were constantly observed in disturbed currents.

(4) Bend of electrode

The anodes were taken out of the model electrolyzer after the electrolysis, and the bend of the electrode was measured. The results are listed in Table 1.

<Evaluation grades>

A (Excellent): The bend was less than 0.03 mm;
B (Good): The bend was 0.03 mm or more and less than 0.13 mm;
C (Acceptable): The bend was 0.13 mm or more and less than 2.0 mm; and
D (Poor): The bend was 2.0 m or more.

(5) Pair voltage

The cell voltage (V) was measured after 60 minutes from the start of energization. The results are listed in Table 1.

(Examples A2-A4, Comparative Examples A5-A7 and Comparative Examples

Alkaline water electrolysis was conducted in the similar manner to the Example A1 except that the configurations of model electrolyzers and the conditions of the water electrolysis were modified as listed in Table 1.

(Comparative Example 5)

Particularly in Comparative Example 5, two model electrolyzers were provided, each of which had a length A of 2.4 m, a length B of 0.015 m, an interval C of 0.06 m, a cross-sectional area D of 0.0009, and the value of $\{2 \times D / (B + C)\}$ is 0.024. Then a cathode outlet side hose attached to a first model electrolyzer was couple to a cathode inlet side hose of a second model electrolyzer, and an anode outlet side hose of the first model electrolyzer was coupled to an anode inlet side hose of the second model electrolyzer. The two model electrolyzers were arranged side by side in the direction of the length A to prepare a model electrolyzer having a length of 4.8 m equivalent to the length A.
The results of the evaluations in Examples A1-A4, Comparative Examples A5-A7 and Comparative Examples 1-5 are listed in Table 1.

Table 1-1

| | | | Example A1 | Example A2 | Example A3 | Example A4 | Example A5 * | Example A6 * | Example A7 * |
|---|---|---|---|---|---|---|---|---|---|
| Electrolyzer Electrolysis device | Length A | m | 1.2 | 1.2 | 1.2 | 1.2 | 1.2 | 2.4 | 2.4 |
| | Length B | m | 0.0150 | 0.0200 | 0.0280 | 0.0200 | 0.0200 | 0.0080 | 0.0280 |
| | Interval C | m | 0.0900 | 0.0900 | 0.0900 | 0.0600 | 0.1800 | 0.0600 | 0.1600 |
| | Cross-sectional area D | $^2$ m$^2$ | 0.0014 | 0.0018 | 0.0025 | 0.0012 | 0.0036 | 0.0005 | 0.0045 |
| | (2×D)/(B+C) | m | 0.0257 | 0.0327 | 0.0427 | 0.0300 | 0.0360 | 0.0141 | 0.0477 |
| Electrolysis method | Num of flow rectifiers | | 2 | 2 | 2 | 4 | 2 | 4 | 2 |
| | Kinematic viscosity v | m2/s | 0.00000061 | 0.00000061 | 0.00000061 | 0.00000061 | 0.00000061 | 0.00000061 | 0.00000061 |
| | Flow rate of elect. Q | m3/s | 0.0000075 | 0.00001 | 0.000014 | 0.00001 | 0.00001 | 0.000004 | 0.000014 |
| | Re of electrolyte | - | 78 | 99 | 130 | 82 | 55 | 39 | 81 |
| | Current density | kA/m$^2$ | 10 | 10 | 10 | 10 | 10 | 10 | 10 |
| | Cell inlet liquid temp. | °C | 80 | 80 | 80 | 80 | 80 | 80 | 80 |
| Evaluation | (1) Gas accumulation | - | A | B | B | B | B | A | B |
| | (2) In-cell temp. difference | - | B | B | A | B | B | C | A |
| | (3) Pressure fluctuation | - | B | B | A | B | B | B | A |
| | (4) Bend of cathode | - | B | B | B | A | C | A | C |
| | (5) Pair voltage | V | 1.76 | 1.78 | 1.77 | 1.75 | 1.81 | 1.76 | 1.82 |
| Comparative Example | | | | | | | | | |

Table 1-2

| | | | Comparative Example 1 | Comparative Example 2 | Comparative Example 3 | Comparative Example 4 | Comparative Example 5 |
|---|---|---|---|---|---|---|---|
| Electrolyzer Electrolysis device | Length A | m | 1,2 | 1.2 | 2.4 | 2,4 | 4.8 (2.4×2) |
| | Length B | m | 0,0020 | 0,0500 | 0,0080 | 0,0320 | 0,0150 |
| | Interval C | m | 0.0900 | 0.0900 | 0.0400 | 0.2000 | 0.0600 |
| | Cross-sectional area D | m$^2$ | 0,0002 | 0,0045 | 0,0003 | 0,0064 | 0,0009 |
| | (2×D)/(B+C) | m | 0,0039 | 0,0643 | 0,0133 | 0,0552 | 0,0240 |
| | Num of flow rectifiers | | 2 | 2 | 4 | 2 | 2 |
| Electrolysis method | Kinematic viscosity v | m2/s | 0,00000061 | 0,00000061 | 0,00000061 | 0,00000061 | 0,0000006 |
| | Flow rate of elect. Q | m$^3$/s | 0,000001 | 0,000025 | 0,000004 | 0,000016 | 0,0000075 |
| | Re of electrolyte | - | 12 | 195 | 55 | 75 | 109 |
| | Current density | kA/m$^2$ | 10 | 10 | 10 | 10 | 10 |
| | Cell inlet liquid temp. | °C | 80 | 80 | 80 | 80 | 80 |
| Evaluation | (1) Gas accumulation | - | B | D | A* | C | A |
| | (2) In-cell temp. difference | - | B | C | D | C | D |
| | (3) Pressure fluctuation | - | D | A | C | A | B |
| | (4) Bend of cathode | - | B | B | A | D | A |
| | (5) Pair voltage | v | 1,81 | 1,82 | 1,93 | 2,09 | 1,79 |

* Gas phase appeared on top

33

(Example A8)

A bipolar cell for alkaline water electrolysis and an electrolysis device for alkaline water electrolysis having the same were fabricated as follows.

- Partition walls, outer frame, and flow rectifiers

As a bipolar element, a member made of nickel was used in which a partition wall separating an anode from a cathode and an outer frame surrounding the partition wall were united. The partition wall had a length of 500 mm, a width of 580 mm, and a thickness of 2 mm in plan view.

Five anode-side flow rectifiers (anode-side ribs) each having a height of 25 mm and a thickness of 1.5 mm and made of nickel, and five cathode-side flow rectifiers (cathode-side ribs) each having a height of 25 mm and a thickness of 1.5 mm and made of nickel, were welded on the side of the anode compartment and on the side of the cathode compartment, respectively, at an interval of 95 mm (the distance between the outer frame to the flow rectifier was 95.5 mm).

Each flow rectifier had, on the side of the welding, 12 semi-circular holes each having a 10-mm radius provided at regular intervals in the direction in which the flow rectifiers extended.

- Anodes, cathodes, membranes, and gasket -

Anodes, cathodes, membranes, and gaskets similar to those used in Example A1 were used.

The dimension of the anodes and the cathodes in plan view was 500 mm × 580 mm.

- Bipolar electrolyzer and bipolar element -

Five bipolar elements were used to assemble a bipolar electrolyzer. As illustrated in FIG. 1, a fast head, an insulation plate, and an anode terminal element were arranged in this order from one end. An anode-side gasket part, a membrane, a cathode-side gasket part, and a bipolar element were then repeatedly arranged five times. A cathode terminal element, an insulation plate, and a loose head were then arranged on the other end. The structure was then clamped on the surfaces of the fast head and the loose head with eight tie rods, and each tie rod was tightened with a torque wrench with a tightening torque of 59 N·m.

This Example had a serial-connection structure in which five cathode compartments and five anode compartments were connected in series.

When viewed from the direction orthogonal to the partition wall, this zero-gap bipolar element had a rectangular shape having a length of 540 mm and a width of 620 mm.

- Electrolysis compartments -

The lengths of the electrode compartments in the direction orthogonal to the partition wall (depths of the electrode compartments) were 25 mm in the anode compartments and the cathode compartments.

- Zero gap structure -

As described above, by assembling the bipolar electrolyzer, the cathode and the anode were pressed against the membrane from the surfaces the cathode and the anode such that the cathode and the anode were brought into contact with the membrane, thereby defining a zero-gap structure, as illustrated in FIG. 2.

Only the anode was used on the anode side, whereas a combination of "cathode - conductive elastic body - current collector" was used on the cathode side. The zero-gap structure was formed in the similar manner to Example A1.

- Header (outer header) -

As illustrated in FIG. 6, in the bipolar electrolyzer 50 in this Example, tubes 20 (anode dispensing tube 20Oai, cathode dispensing tube 20Oci, anode collecting tube 20Oao, and cathode collecting tube 20Oco) for dispensing or collecting the electrolyte were provided at the outside of the electrolyzer 50.

Further, to the electrolyzer 50, hoses (anode inlet side hose 10Oai, anode outlet side hose 10Oao, inlet side hose 10Oci, and cathode outlet side hose 10Oco) for allowing passage of the electrolyte from conduits 20 to the electrolysis compartments 5 were provided externally .

A thermocouple was installed in each hose (10Oai, 10Oao, 10Oci, 10Oco), and the temperature differences before and after passage through the electrolysis compartment were measured.

An outer header type electrolyzer was thus fabricated.

The electrolyte was made to flow by introducing it to the cathode compartment 5c via the cathode inlet side hose 10Oci, and by discharging it from the cathode compartment 5c via the cathode outlet side hose 10Oco.

The electrolyte was also made to flow by introducing it to the anode compartment 5a via the anode inlet side hose 10Oai, and by discharging it from the anode compartment 5a via the anode outlet side hose 10Oao.

As illustrated in FIG. 6, the inlet side hoses were connected to end of the lower part of the rectangular outer frame in plan view, and the outlet side hoses were connected to the upper part of the lateral sides of the rectangular outer frame in plan view corresponding to the lower sides. Here, the inlet side hoses and the outlet side hoses were provided so as to face to each other sandwiching the center of the electrode compartment, in the rectangular electrolysis compartment in plan view. The electrolyte flowed upwards from the bottom to upward so as to be angled to the vertical direction, to elevate on the electrode surfaces.

The bipolar electrolyzer in this Example structured such that the electrolyte was introduced from the inlet side hoses of the anode compartment 5a and the cathode compartment 5c to the anode compartment 5a and the cathode compartment 5c, respectively, and the electrolyte and evolved gases were discharged from the outlet side hoses of the anode compartment 5a and the cathode compartment, out of the electrolyzer, respectively.

Since electrolysis produced hydrogen gas in the cathode compartment 5c and oxygen gas in the anode compartment 5a, there were formed a mixed-phase flow of the electrolyte and the hydrogen gas in the cathode-side outlet hose 10Oco and a mixed-phase flow of the electrolyte and the oxygen gas in the anode-side outlet hose 10Oao.

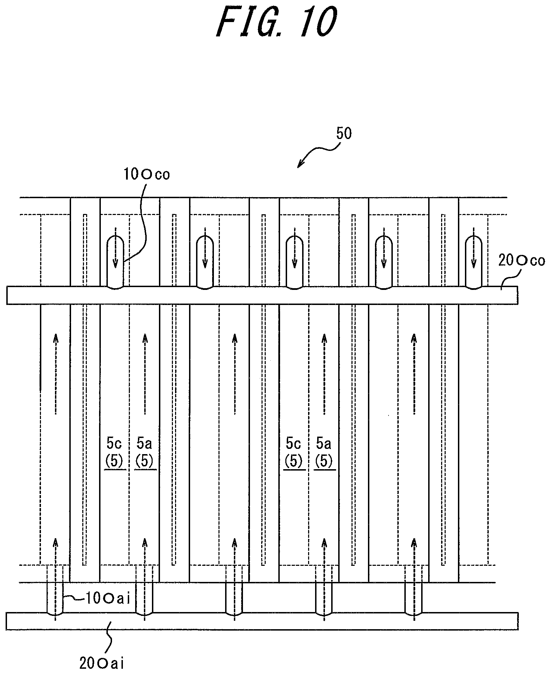

FIG. 10 is a partial side view of an outer header type bipolar electrolyzer together with the flow of electrolyte in Examples A.

A rectifier, an oxygen concentration meter, a hydrogen concentration meter, flow meters, and pressure gauges similar to those used in Example A1 were used.

Components, such as tubing pump, a gas-liquid separation tank, and a water replenisher, which were the same as those used in Example A1, were used to fabricate an alkaline water electrolysis device (see FIG. 8).

Alkaline water electrolysis using the bipolar electrolyzers was conducted in the following conditions.

As electrolyte, 30% KOH aqueous solution was used.

Current was supplied to the areas of the cathode and the anode in the bipolar electrolyzer by the rectifier to the bipolar electrolyzer at a current density of 10 kA/m$^2$.

The tubing pump made the electrolyte to circulate through the anode compartment, the oxygen separation tank (gas-liquid separation tank for anode), and the anode compartmentvla, and also through the cathode compartment, the hydrogen separation tank (gas-liquid separation tank for cathode), and the cathode compartment.

Parameters, such as the kinematic viscosity v (m$^2$/second) of the electrolyte, the flow rate Q of the electrolyte per electrode compartment (m$^2$/second), and the Reynolds number Re of the electrolyte, the temperature of the electrolyte, were measured and/or calculated in the similar manner to Example A1.

Detailed conditions are listed Table 2.

The pressure in the electrolyzer after the start of energization was measured with each pressure gauge and adjusted such that the anode-(hydrogen-) side pressure was 50 kPa and the cathode- (oxygen-) side pressure was 49 kPa. The pressure adjustment was carried out by a control valve installed downstream to each pressure gauge.

(Electrolysis test 1)

Water electrolysis was conducted by continuously supplying a current density of 10 kA/m$^2$ from the rectifier to the electrolyzer.

In Example A8, the water electrolysis was conducted in three conditions listed in Table 2. The water electrolysis was conducted for 100 hours in each condition, and evaluations of above (2) to (5) of (1) to (5) were made after 80 hours after the start of the electrolysis.

Detailed conditions and result are listed in Table 2.

Table 2

| | | | Example A8 |
|---|---|---|---|
| Electrolyzer Electrolysis device | Length A | m | 0.5 |
| | Length B | m | 0.0250 |
| | Interval C | m | 0.0950 |
| | Cross-sectional area D | 2 m | 0.0024 |
| | (2×D)/(B+C) | m | 0.0396 |

(continued)

| | | | Example A8 | | |
|---|---|---|---|---|---|
| Electrolysis method | Num of flow rectifiers | | 5 | 5 | 5 |
| | Kinematic viscosity v | m2/s | 0.00000061 | 0.00000061 | 0.00000061 |
| | Flow rate of elect. Q | $m^3$/s | 0.0000203 | 0.00000435 | 0.0003915 |
| | Re of electrolyte | - | 92 | 20 | 1783 |
| | Current density | $kA/m^2$ | 10 | | |
| | Cell inlet liquid temp. | °C | 90 | | |
| Evaluations | (1) Gas accumulation | - | A | A | A |
| | (2) In-cell temp. difference | - | A | A | C |
| | (3) Pressure fluctuation | - | B | B | B |
| | (4) Bend of cathode | V | 1.77 | 1.79 | 1.75 |

(Example B1)

A bipolar electrolyzer for alkaline water electrolysis was fabricated as follows.

- Partition wall and outer frame -

As a bipolar element, one having a partition wall separating an anode from a cathode and an outer frame surrounding the partition wall was used. Those members in contact with the electrolyte, such as the partition wall and the frame of the bipolar element, were all made of nickel.

- Anode -

An anode that was the same as that Example A1 was used.
This electrode was cut into a 50-cm square piece, which was used as an anode.

(Cathode)

A cathode that was the same as that Example A1 was used.

- Conductive elastic body -

As a conductive elastic body, a woven metal fabric of nickel wires having a wire diameter of 0.15 mm corrugated so as to have a corrugation height of 5 mm, was used. The thickness was 5 mm, and the density was 4.249 g/cm$^3$. The repulsive force at 50% compressive deformation was 150 g/cm$^3$, and the mesh opening was about 5 mesh.

- Membrane -

A membrane that was the same as that Example A1 was used.

- Gasket -

The gaskets used had a quadrangular shape with a thickness of 4.0 mm, a width of 18 mm, and an inner size of 504 mm square, having an opening having the same size as the electrode compartment in plan view, and having a slit structure for holding by receiving the membrane in. In the slit structure, a gap of 0.4 mm was provided at the center in the thickness direction of the inner wall of the opening to hold the partition wall by inserting the partition wall therethrough. This gasket was made of EPDM rubber and had an elastic modulus at 100% deformation of 4 MPa.

- Bipolar electrolyzer for alkaline water electrolysis -

A cathode rib, a cathode current collector, the conductive elastic body, and the cathode were overlapped to one another in this order on the side of the cathode relative to the partition wall, and an anode rib and the anode were overlapped to one another in this order on the side of the anode relative to the partition wall, to fabricate a bipolar element (see FIG. 4).

An anode terminal element was provided by attaching the anode to an anode terminal frame, and a cathode terminal element was provided by attaching the cathode to a cathode terminal frame.

Nine bipolar elements, one anode terminal element, and one cathode terminal element were prepared. Gaskets were adhered to metal frame sections of all of the bipolar elements, the anode terminal element, and the cathode terminal element.

One membrane was interposed between the anode terminal element and the cathode in the bipolar element. Further, nine bipolar elements were arranged in series such that an anode and a cathode in adjacent bipolar elements faced to each other, and respective eight membranes were interposed between adjacent bipolar elements. One membrane was further interposed between the anode side end of the 9th bipolar element and the cathode terminal element. The resultant structure was clamped with a press machine to provide a bipolar electrolyzer. As illustrated in FIG. 1, in the bipolar electrolyzer, a fast head, an insulation plate, and the anode terminal unit were arranged in this order on one end, whereas the cathode terminal unit, an insulation plate, and an loose head were arranged in other end.

In this bipolar electrolyzer, the area S1 of the current-carrying surface of the bipolar element was adjusted to 0.25 $m^2$. The heights of the cathode rib and the anode rib were adjusted such that the distance 'a' between the anode and the cathode current collector having the membrane interposed therebetween became 1 mm in a zero-gap structure. The membrane was in contact with the anode and the cathode to form a zero-gap structure.

The wire diameter of the conductive elastic body was 0.15 mm. The density of the conductive elastic bodies was 4.249 $g/cm^3$. The surface pressure being applied between the membrane and the cathode in the zero-gap structure was 98.1 $kN/m^2$.

- Header -

An inner header type bipolar element was employed.

As illustrated in FIGS. 3 and 4, headers (anode inlet header 10ai, cathode inlet header lOci, anode outlet header 10ao, and cathode outlet header lOco) were placed on the outer frame of the bipolar element. Each header was placed such that all of the tubes (anode dispensing tube, cathode dispensing tube, anode collecting tube, and cathode collecting tube) extended in the direction orthogonal to the partition wall of the bipolar element.

An inner header type electrolyzer is thus fabricated.

The electrolyte was made to flow by introducing it to the cathode compartment 5c via the cathode inlet header 10ci, and by discharging it from the cathode compartment 5c via the cathode outlet header lOco. The electrolyte was also made to flow by introducing it to the anode compartment 5a via the anode inlet header 10ai, and by discharging it from the anode compartment 5a via anode outlet the header lOco.

The bipolar electrolyzer is structured such that the electrolyte was introduced from the electrolyte inlets of the anode compartment 5a and the cathode compartment 5c to the anode compartment 5a and the cathode compartment 5c, respectively, and the electrolyte and evolved gases were discharged from the electrolyte outlets of the anode compartment 5a and the cathode compartment , out of the electrolyzer, respectively.

Since electrolysis produced hydrogen gas in the cathode compartment 5c and oxygen gas in the anode compartment 5a, there were formed a mixed-phase flow of the electrolyte and the hydrogen gas in the cathode outlet header lOco and a mixed-phase flow of the electrolyte and the oxygen gas in the anode outlet header 10ao.

(Example B2)

A bipolar element was produced in the same manner as in Example B1 except that the heights of the cathode rib and the anode rib were adjusted such that the distance 'a' between an anode and a cathode current collector became 2 mm in a zero-gap structure. The membrane was in contact with the anode and the cathode to form a zero-gap structure.

The wire diameter of the conductive elastic body was 0.15 mm. The density of the conductive elastic body was 0.708 $g/cm^3$. The surface pressure being applied between the membrane and the cathode in the zero-gap structure was 29.4 $kN/m^2$.

(Example B3)

A bipolar element was produced in the same manner as in Example B1 except that the heights of the cathode rib and the anode rib were adjusted such that the distance 'a' between an anode and a cathode current collector became 5.8 mm in a zero-gap structure. The membrane was in contact with the anode and the cathode to form a zero-gap structure.

The wire diameter of the conductive elastic body was 0.15 mm. The density of the conductive elastic bodies was 0.170 $g/cm^3$. The surface pressure being applied between the membrane and the cathode in the zero-gap structure was 9.81 $kN/m^2$.

(Example B4)

A bipolar element was produced in the same manner as in Example B1 except that the heights of the cathode rib and the anode rib were adjusted such that the distance 'a' between an anode and a cathode current collector became 1 mm in a zero-gap structure. The membrane was in contact with the anode and the cathode to form a zero-gap structure.

The wire diameter of the conductive elastic body was 0.1 mm. The density of the conductive elastic bodies was 2.833 $g/cm^3$. The surface pressure being applied between the membrane and the cathode in the zero-gap structure was 88.3 $kN/m^2$.

(Example B5)

A bipolar element was produced in the same manner as in Example B1 except that the heights of the cathode rib and the anode rib were adjusted such that the distance 'a' between an anode and a cathode current collector became 2 mm in a zero-gap structure. The membrane was in contact with the anode and the cathode to form a zero-gap structure.

The wire diameter of the conductive elastic body was 0.1 mm. The density of the conductive elastic bodies was 0.472 $g/cm^3$. The surface pressure being applied between the membrane and the cathode in the zero-gap structure was 24.5 $kN/m^2$.

(Example B6)

A bipolar element was produced in the same manner as in Example B1 except that the heights of the cathode rib and the anode rib were adjusted such that the distance 'a' between an anode and a cathode current collector became 5.8 mm in a zero-gap structure. The membrane was in contact with the anode and the cathode to form a zero-gap structure.

The wire diameter of the conductive elastic body was 0.1 mm. The density of the conductive elastic bodies was 0.113 $g/cm^3$. The surface pressure being applied between the membrane and the cathode in the zero-gap structure was 9.81 $kN/m^2$.

(Example B7)

A bipolar element was produced in the same manner as in Example B1 except that the heights of the cathode rib and the anode rib were adjusted such that the distance 'a' between an anode and a cathode current collector became 2 mm in a zero-gap structure. The membrane was in contact with the anode and the cathode to form a zero-gap structure.

The wire diameter of the conductive elastic body was 0.5 mm. The density of the conductive elastic bodies was 2.361 $g/cm^3$. The surface pressure being applied between the membrane and the cathode in the zero-gap structure was 93.2 $kN/m^2$.

(Comparative Example B1)

A bipolar element was produced in the same manner as in Example B1 except that the heights of the cathode rib and the anode rib were adjusted such that the distance 'a' between an anode and a cathode current collector became 0.95 mm in a zero-gap structure. The membrane was in contact with the anode and the cathode to form a zero-gap structure.

The wire diameter of the conductive elastic body was 0.15 mm. The density of the conductive elastic bodies was 5.665 $g/cm^3$. The surface pressure being applied between the membrane and the cathode in the zero-gap structure was 147 $kN/m^2$.

(Comparative Example B2)

A bipolar element was produced in the same manner as in Example B1 except that the heights of the cathode rib and the anode rib were adjusted such that the distance 'a' between an anode and a cathode current collector became 6.8 mm in a zero-gap structure. The membrane was in contact with the anode and the cathode to form a zero-gap structure.

The wire diameter of the conductive elastic body was 0.15 mm. The density of the conductive elastic bodies was 0.142 g/cm$^3$. The surface pressure being applied between the membrane and the cathode in the zero-gap structure was 0.981 kN/m$^2$.

[Evaluations]

(Distance between anode and cathode current collector)

In the bipolar electrolyzers provided in Examples B and Comparative Examples B, the distance 'a' (FIG. 2) (mm) between the surface in which a cathode current collector and a conductive elastic body made a contact, and the surface in which the anode and the membrane made a contact.

(Surface pressure being applied between membrane and cathode)

Measurements were carried out using the compression measurement mode of the autograph available from Shimadzu Corporation.
The cathode current collector, the conductive elastic body, the cathode, the membrane, and the anode were stacked on a receiving jig made of polyvinylchloride and having a 10-cm square opening and a depth of 2 cm. A pressing device of 9.9-cm square was attached to the autograph. While vertical pressing was being applied with the pressing device, the surface pressure (kN/m$^2$) being applied between the membrane and the cathode was measured when the distance between the anode and the cathode current collector equaled the value in Table 1.

(Density of conductive elastic body)

The conductive elastic body was cut into a 10-cm square piece, and the piece was weighed with an electronic balance. A pressure as much as the pressure applied on the conductive elastic body when the surface pressure between the membrane and the cathode had been measured, was applied on the conductive elastic body, and the volume of conductive elastic body was measured as the volume when the conductive elastic body was compressed. The density of the conductive elastic bodies (g/cm$^3$) was determined by dividing the mass of the conductive elastic body with the volume of the conductive elastic body upon the compression.

(Wire diameter of conductive elastic body)

A conductive elastic body was cut out from each of the bipolar electrolyzers in Examples B and Comparative Examples, and the wire diameters of 100 fibers observed on a cross-section of the conductive elastic body were measured, which was then averaged to obtain a wire diameter (mm).

(Average water permeation pore size of membrane)

The membranes were cut out from each of the bipolar electrolyzers provided in Examples B and Comparative Examples B, and measurements were carried out by the following procedure using the integrity testing system ("Sartocheck Junior BP-Plus" available from Sartorius Stedim Japan K.K.).
First, a membrane (porous membrane), together with a core material, was cut into a given-sized piece as a sample. This sample was set in a pressure-resistant vessel for measurements (area of transparent section: 12.57 cm$^2$), and the vessel was filled with 150 mL of pure water. Next, the pressure-resistant vessel was placed in a thermostatic chamber set at 90°C, and a measurement was initiated after the interior of the pressure-resistant vessel reaches at 90°C. After the measurement was started, the front of the sample was pressurized with nitrogen. The values of the pressure and the permeation flow rate at which pure water permeated through the sample from its back were recorded. The average water permeation pore size was determined by the following Hagen-Poiseuille equation using the gradient of the pressures versus the water permeation flow rates at pressures between 10 kPa and 30 kPa:

$$\text{Average water permeation pore size (m)} = 32\eta L\mu_0 \, / \, (\varepsilon P)$$

where $\eta$ is the viscosity (Pa·S) of water, L is the thickness (m) of the porous membrane, and $\mu_0$ is an apparent flow rate calculated by the equation:

$$\mu_0 \text{ (m/s)} = \text{flow rate (m}^3\text{/s)} \, / \, \text{flow passage area (m}^2\text{)}.$$

In addition, ε is the porosity and P is the pressure (Pa).

(Thickness of membrane)

The thicknesses of the membranes in all of the bipolar electrolyzers provided in Examples B and Comparative Examples were measured, and their average was determined as the thickness of the membrane (mm).

(Porosity of membrane)

The measurement of the porosity of the membrane was conducted using an electronic precision balance/specific gravity measurement kit ("AUX120 + SMK401" available from Shimadzu Corporation). The open pore porosity which was determined by Archimedes method for the porous membrane was employed as the porosity of the membrane for alkaline water electrolysis. The porosity was calculated by the equation given below. The membranes were cut out from the bipolar electrolyzers provided in Examples B and Comparative Examples B, washed with pure water, and cut into three pieces with a size of 3 cm × 3 cm, as measurement samples. W2 and W3 of each sample were measured. After that, the porous membrane was left to dry in a dryer set at 50°C for 12 hours or more, and W1 of the membrane was then measured. The porosity was then determined from the values of W1, W2, and W3. The values of the porosity were determined for the three samples, and the arithmetic average of the determined values was employed as the porosity P.

$$\text{Porosity } \varepsilon \ (\%) = \rho \ (1 + \rho) \times 100$$

In this equation, ρ is equal to (W3 - W1)/(W3 - W2), where W1 is a dry weight (g) of the porous membrane, W2 is a weight in water (g) of the porous membrane, and W3 is a water-saturated weight (g) of the porous membrane.)

(Cell voltage)

Electrolysis devices as illustrated in FIG. 5 were fabricated using the bipolar electrolyzers provided in Examples B and Comparative Examples.

An oxygen concentration meter, a hydrogen concentration meter, pressure gauges, a rectifier, a tubing pump, gas-liquid separation tanks, and a water replenisher, for example, which were commonly used in the technical field, were used to fabricate each electrolysis device.

Each electrolysis device comprised a bipolar electrolyzer 50, a tubing pump 71 for circulating the electrolyte, and gas-liquid separation tanks 72 for separating the electrolyte from hydrogen and/or oxygen. A 30% KOH aqueous solution was sealed as the electrolyte in each gas-liquid separation tank 72 and in the bipolar electrolyzer 50. The electrolyte was caused by the tubing pump 71 to circulate through the anode compartments 5a of the bipolar electrolyzer 50, the gas-liquid separation tank 72 for anode, and the anode compartments 5a, and through the cathode compartments 5c of the bipolar electrolyzer 50, the gas-liquid separation tank 72 for cathode, and the cathode compartments 5c. The temperature was adjusted to 90°C.

In the electrolysis device, the gas separated in each gas-liquid separation tank 72 was recovered through a pressure gauge 78, a pressure control valve 80, an oxygen concentration meter 75, or a hydrogen concentration meter 76. In addition, electric power could be controlled by the rectifier 74. In addition, flow meters 77 and a heat exchanger 79 were provided in the passage of the circulating electrolyte. Arrows in FIG. 5 indicate directions in which the circulating liquid (electrolyte) and the gas flowed.

In the circulation passage, a 20A SGP carbon steel plumbing system was used with Teflon® lining inner surface treatment applied to those portions in contact with the electrolyte (Teflon is a registered trademark in Japan, other countries, or both). The gas-liquid separation tank 72 used had a height of 1,400 mm and a volume of 1 $m^3$.

The amount of liquid in each gas-liquid separation tank 72 was about 50% of the design volume.

FIG. 3 schematically illustrates the direction of flow of the electrolyte in an electrolysis device in an inner header type bipolar electrolyzer used for measuring the cell voltage. As illustrated in FIG. 3, when the bipolar element is viewed in plan view, the electrolyte was made to flow in the direction from the inlet headers to the outlet headers in the vicinities of the anode and the cathode. In the cross-section of the bipolar electrolyzer, the electrolyte was made to flow in the direction along the partition wall (FIG. 4).

A current was supplied to from the rectifier 74 to the bipolar electrolyzer 50 at the current densities of 6 kA/$m^2$ on the geometrical areas of the cathode and the anode. The electrode surface (current-carrying surface) was 500 mm × 500 mm, and hence a current of 1.5 kA was provided.

Current was continuously applied for 100 hours at a current density of 6 kA/$m^2$ in the above electrolytic device to perform water electrolysis. The voltages of the respective cells were measured, and the arithmetic mean V of the cell voltages was calculated.

Evaluation results in Example B are listed in Table 3.

| Table 3 | | Example B 1 | Eexample B2| | Example B3 | Eexample B4 | Example B1 | Example B6 | Eexample B7 |
|---|---|---|---|---|---|---|---|---|
| Electrolyzer Electrolysis device | Length of electrode compartment A (m) | 0.5 | 0.5 | 0.5 | 0.5 | 0.5 | 0.5 | 0.5 |
| | Length of electrode compartment B (mm) | 13.9 | 12.9 | 9.1 | 13.9 | 12.9 | 9.1 | 12.9 |
| | Interval of flow rectifiers C (mm) | 95 | 95 | 95 | 95 | 95 | 95 | 95 |
| | Number of flow rectifiers | 4 | 4 | 4 | 4 | 4 | 4 | 4 |
| Electrolysis method | Flow rate of electrolyte Q (m³/s) | $4.35\times10^{-6}$ | $4.35\times10^{-6}$ | $4.35\times10^{-6}$ | $4.35\times10^{-6}$ | $4.35\times10^{-6}$ | $4.35\times10^{-6}$ | $4.35\times10^{-6}$ |
| | Current density (kA/m²) | 6 | 6 | 6 | 6 | 6 | 6 | 6 |
| | Cell inlet liquid temperature (°C) | 90 | 90 | 90 | 90 | 90 | 90 | 90 |
| | Distance between anode and cathode (mm) | 1 | 2 | 5.8 | 1 | 2 | 5.8 | 2 |
| | Density of conductive elastic body (g/cm³) | 4.249 | 0.708 | 0.170 | 2.833 | 0.472 | 0.113 | 2.361 |
| | Surface pressure of membrane and cathode (kN/m²) | 98.1 | 29.4 | 9.81 | 88.3 | 24.5 | 9.81 | 93.2 |
| | Wire diameter of conductive elastic body (mm) | 0.15 | 0.15 | 0.15 | 0.10 | 0.10 | 0.10 | 0.50 |
| | Average water permeation pore size of membrane (mm) | 0.2 | 0.2 | 0.2 | 0.2 | 0.2 | 0.2 | 0.2 |
| Electrolyzer Electrolysis device | Thickness of membrane (mm) | 500 | 500 | 500 | 500 | 500 | 500 | 500 |
| | Porosity of membrane (%) | 50 | 50 | 50 | 50 | 50 | 50 | 50 |
| | Rib pitch (mm) | 95 | 95 | 95 | 95 | 95 | 95 | 95 |
| | Area of current-carrying surface of bipolar element (m2) | 0.25 | 0.25 | 0.25 | 0.25 | 0.25 | 0.25 | 0.25 |
| Evaluations | (2) In-cell temperature difference (-) | A | A | A | A | A | A | A |
| | (3) Pressure fluctuation (-) | A | A | A | A | A | A | A |
| | (4) Bend of anode (-) | B | B | B | B | B | B | B |
| | (5) Cell voltage (V) | 1.85 | 1.78 | 1.8 | 1.8 | 1.78 | 1.8 | 1.78 |

As listed in Table 3, the bipolar electrolyzers in Examples B exhibited no increases in the cell voltages, and exhibited allowable performances for electrolyzers used in real settings. In contrast, the cell voltages increased in Comparative Examples B, which were not fall within the allowable range as electrolyzers for real settings.

INDUSTRIAL APPLICABILITY

In accordance with the present disclosure, in alkaline water electrolysis employing an electrolyzer having a zero-gap structure, the energy conversion efficiency is increased and an increase in the temperature of the electrolyte is suppressed.

In accordance with the present disclosure, in alkaline water electrolysis, an increase in the cell voltage is suppressed even in operations under variable power sources, such as renewable energies, for example.

The present disclosure significantly increases the current density to be provided to an electrolysis device, increases the throughput of an electrolysis facility, which enables reduction in the construction cost of electrolysis facilities and improvements in the footprint.

REFERENCE SIGNS LIST

| | |
|---|---|
| 1 | Partition wall |
| 2 | Electrode |
| 2a | Anode |
| 2c | Cathode |
| 2e | Conductive elastic body |
| 2r | Current collector |
| 3 | Outer frame |
| 4 | Membrane |
| 5 | Electrode compartment |
| 5a | Anode |
| 5c | Cathode |
| 5i | Electrolyte inlet |
| 5o | Electrolyte outlet |
| 5ai | Anode electrolyte inlet |
| 5ao | Anode electrolyte outlet |
| 5ci | Cathode electrolyte inlet |
| 5co | Cathode electrolyte outlet |
| 6 | Flow rectifier (rib) |
| 6a | Anode flow rectifier (anode rib) |
| 6c | Cathode flow rectifier (cathode rib) |
| 7 | Gasket |
| 10 | Header |
| 10ai | Anode inlet header |
| 10ao | Anode outlet header |
| 10ci | Cathode inlet header |
| 10co | Cathode outlet header |
| 10I | Inner header |
| 10O | Outer header |
| 10Oai | Anode inlet header (anode inlet side hose) |
| 10Oao | Anode outlet header (anode outlet side hose) |
| 10Oci | Cathode inlet header (cathode inlet side hose) |
| 10Oco | Cathode outlet header (cathode outlet side hose) |
| 20 | Conduit |
| 20ai | Anode dispensing tub |
| 20ao | Anode collecting tube |
| 20ci | Cathode dispensing tube |
| 20co | Cathode collecting tube |
| 20Oai | Anode dispensing tube |
| 20Oao | Anode collecting tube |

| 20Oci | Cathode dispensing tube |
| --- | --- |
| 20Oco | Cathode collecting tube |
| 50 | Bipolar electrolyzer |
| 51g | Fast head, loose head |
| 51i | Insulation plate |
| 51a | Anode terminal element |
| 51c | Cathode terminal element |
| 51r | Tie rod |
| 60 | Bipolar element |
| 65 | Electrolysis cell |
| 70 | Electrolysis device |
| 71 | Tubing pump |
| 72 | Gas-liquid separation tank |
| 72h | Hydrogen separation tank |
| 72o | Oxygen separation tank |
| 73 | Water replenisher |
| 74 | Rectifier |
| 75 | Oxygen concentration meter |
| 76 | Hydrogen concentration meter |
| 77 | Flow meter |
| 78 | Pressure gauge |
| 79 | Heat exchanger |
| 80 | Pressure control valve |
| D1 | Given direction along partition wall (electrolyte passage direction) |
| A | Length of electrode compartment in given direction along partition wall |
| B | Length of electrode compartment in direction orthogonal to partition wall |
| C | Interval between flow rectifiers |
| P | Longitudinal length of acrylic plate |
| Q | Lateral length of acrylic plate |
| R | Thickness acrylic plate |
| Z | Zero-gap structure |

**Claims**

1. An electrolyzer (50), comprising:

   a plurality of elements (60) overlapped one another with a membrane (4) interposed therebetween, each element comprising an anode (2a), a cathode (2c), a partition wall (1) separating the anode (2a) from the cathode (2c), and an outer frame (3) bordering the partition wall (1), the membrane (4) being in contact with the anode (2a) and the cathode (2c) to form a zero-gap structure (Z); and
   a plurality of flow rectifiers (6) that are arranged so as to be parallel to each other in electrode compartments (5) so as to be parallel to a given direction along the partition wall (1), each electrode compartment (5) being defined by the partition wall (1), the outer frame (3), and the membrane (4),
   wherein the length A of the electrode compartment (5) in the given direction is 0.40 m or more and 4.0 m or less, the length B of the electrode compartment (5) in the direction orthogonal to the partition wall (1) is 0.0030 m or more and 0.030 m or less, and the interval C between the plurality of flow rectifiers (6) is 0.050 m or more and 0.1 m or less, and
   wherein the cross-sectional area D of the electrode compartment (5) on the plane orthogonal to the given direction is 0.00050 $m^2$ or more and 0.0050 $m^2$ or less, and the value of $\{(2 \times D) / (B + C)\}$ is 0.015 m or more and 0.050 m or less.

2. The electrolyzer (50) according to claim 1, wherein at least a part of the flow rectifiers (6) are conductive, and each flow rectifier (6) is physically and electrically connected to the corresponding electrode.

3. The electrolyzer (50) according to any one of claims 1 or 2, wherein a gasket (7) having the membrane (4) is interposed between outer frames (3) of adjacent elements (60), the gasket (7) having a thickness of 3.0 mm to 10 mm, and an elastic modulus at 100% deformation of 1.0 MPa to 10 MPa.

**4.** The electrolyzer (50) according to any one of claims 1-3, wherein a conductive elastic body (2e) and a current collector are provided between the anode (2a) or the cathode (2c) and the partition wall (1) such that the conductive elastic body (2e) is sandwiched between the anode (2a) or the cathode (2c) and the current collector.

**5.** The electrolyzer (50) according to claim 4, wherein the conductive elastic (2e) body is a cushion mat made of nickel.

**6.** The electrolyzer (50) according to any one of claims 1-5, wherein the plurality of elements (60) each comprises the anode (2a) and the cathode (2c), are overlapped one another having the membrane (4) interposed therebetween, the membrane (4) being a porous membrane,

the electrolyzer (50) comprises a cathode complex including the cathode (2c) and a conductive elastic body (2e) and a cathode collector (2r) provided on a side of the cathode (2c) opposite to the membrane (4), and/or an anode complex including the anode (2a) and a conductive elastic body (2e) and an anode collector provided on a side of the anode (2a) opposite to the membrane (4),

the distance between the anode (2a) and the cathode current collector (2r) and/or a distance between the cathode (2c) and the anode current collector are 1.0 mm or more and 6.0 mm or less,

the density of the conductive elastic body (2e) is 0.1 $g/cm^3$ or more and 4.5 $g/cm^3$ or less, and

the surface pressure being applied between the membrane (4) and the anode (2a) and/or the cathode (2c) is 8 $kN/m^2$ or more and 100 $kN/m^2$ or less in the zero-gap structure Z.

**7.** The electrolyzer (50) according to claim 6, wherein the conductive elastic body (2e) has a wire diameter of 0.1 mm or more and 0.5 mm or less.

**8.** The electrolyzer (50) according to claim 6 or 7, wherein the membrane (4) has an average water permeation pore size of 0.01 $\mu$m or more and 1.0 $\mu$m or less, and/or

wherein the membrane (4) has a thickness of 100 $\mu$m or more and 600 $\mu$m or less, and/or
wherein the membrane (4) has a surface opening ratio of 30% or more and 70% or less.

**9.** The electrolyzer (50) according to any one of claims 6-8, wherein a plurality of ribs (6) for securing the cathode (2c) and the anode (2a) are attached, the pitch of the ribs (6) being 50 mm or more and 150 mm or less.

**10.** The electrolyzer (50) according to any one of claims 6-9, wherein the area S1 of a current-carrying surface of the element (60) is 0.1 $m^2$ or more and 10 $m^2$ or less.

**11.** The electrolyzer (50) according to any one of claims 6-10, wherein the thickness 'd' of the element is 10 mm or more and 100 mm or less.

**12.** The electrolyzer (50) according to any one of claims 6-11, wherein the electrolyzer (50) has 50 or more and 500 or less of the electrolysis cells.

**13.** An electrolysis device (70) comprising:

the electrolyzer (50) according to any one of claims 1-12;
a tubing pump (71) configured to circulate an electrolyte;
a gas-liquid separation tank (72) configured to separate hydrogen and/or oxygen from the electrolyte; and
a water replenisher (73) configured to replenish water.

**14.** A water electrolysis method comprising:
performing electrolysis using the electrolysis device (70) according to claim 13 by circulating an electrolyte such that the Reynolds number of the electrolyte calculated from the following formula (1) is 10 to 1800:

$$\text{Formula (1): Re} = Q \,/\, (\text{the number of flow rectifiers (6) per electrode compartment (5) + 1}) \times \{(2 \times D) \,/\, (B + C)\} \,/\, (v \times D),$$

where Q is the flow rate ($m^3$/second) of the electrolyte per electrode compartment (5), and v is the kinematic viscosity

(m$^2$/second) of the electrolyte.

**15.** The water electrolysis method according to claim 14, wherein the temperature of the electrolyte in the electrolyzer (50) is 80°C to 130°C.

**16.** A hydrogen production method for producing hydrogen by electrolyzing water containing an alkali in the electrolyzer (50) as defined in any one of claims 1-12.

**Patentansprüche**

**1.** Elektrolyseur (50), umfassend:

eine Vielzahl von Elementen (60), die einander mit einer dazwischen angeordneten Membran (4) überlappen, wobei jedes Element eine Anode (2a), eine Kathode (2c), eine die Anode (2a) von der Kathode (2c) trennende Trennwand (1) und einen an die Trennwand (1) angrenzenden Außenrahmen (3) umfasst, wobei die Membran (4) mit der Anode (2a) und der Kathode (2c) in Kontakt steht, um eine Null-Lücken-Struktur (Z) zu bilden; und eine Vielzahl von Strömungsgleichrichtern (6), die parallel zueinander in Elektrodenabteilen (5) so angeordnet sind, dass sie parallel zu einer gegebenen Richtung entlang der Trennwand (1) sind, wobei jedes Elektrodenabteil (5) durch die Trennwand (1), den äußeren Rahmen (3) und die Membran (4) definiert ist, wobei die Länge A des Elektrodenabteils (5) in der gegebenen Richtung 0,40 m oder mehr und 4,0 m oder weniger beträgt, die Länge B des Elektrodenabteils (5) in der Richtung orthogonal zur Trennwand (1) 0,0030 m oder mehr und 0,030 m oder weniger beträgt und der Abstand C zwischen der Mehrzahl von Strömungsgleichrichtern (6) 0,050 m oder mehr und 0,1 m oder weniger beträgt, und wobei die Querschnittsfläche D des Elektrodenfachs (5) in der Ebene orthogonal zur gegebenen Richtung 0,00050 m$^2$ oder mehr und 0,0050 m$^2$ oder weniger beträgt und der Wert von $\{(2 \times D) / (B + C)\}$ 0,015 m oder mehr und 0,050 m oder weniger beträgt.

**2.** Elektrolyseur (50) nach Anspruch 1, wobei zumindest ein Teil der Strömungsgleichrichter (6) leitend ist und jeder Strömungsgleichrichter (6) physikalisch und elektrisch mit der entsprechenden Elektrode verbunden ist.

**3.** Elektrolyseur (50) nach einem der Ansprüche 1 oder 2, bei dem eine Dichtung (7) mit der Membran (4) zwischen Außenrahmen (3) benachbarter Elemente (60) angeordnet ist, wobei die Dichtung (7) eine Dicke von 3,0 mm bis 10 mm und ein Elastizitätsmodul bei 100 % Verformung von 1,0 MPa bis 10 MPa aufweist.

**4.** Elektrolyseur (50) nach einem der Ansprüche 1-3, wobei zwischen der Anode (2a) oder der Kathode (2c) und der Trennwand (1) ein leitfähiger elastischer Körper (2e) und ein Stromkollektor vorgesehen sind, so dass der leitfähige elastische Körper (2e) zwischen der Anode (2a) oder der Kathode (2c) und dem Stromkollektor eingeschlossen ist.

**5.** Elektrolyseur (50) nach Anspruch 4, wobei der leitfähige elastische Körper (2e) eine Kissenmatte aus Nickel ist.

**6.** Elektrolyseur (50) nach einem der Ansprüche 1-5, wobei die mehreren Elemente (60), die jeweils die Anode (2a) und die Kathode (2c) umfassen, einander überlappen und die Membran (4) dazwischen angeordnet ist, wobei die Membran (4) eine poröse Membran ist,

die Elektrolyseur (50) einen Kathodenkomplex mit der Kathode (2c) und einem leitfähigen elastischen Körper (2e) und einem Kathodenkollektor (2r), der auf einer der Membran (4) gegenüberliegenden Seite der Kathode (2c) vorgesehen ist, und/oder einen Anodenkomplex mit der Anode (2a) und einem leitfähigen elastischen Körper (2e) und einem Anodenkollektor, der auf einer der Membran (4) gegenüberliegenden Seite der Anode (2a) vorgesehen ist, umfasst, der Abstand zwischen der Anode (2a) und dem Kathodenstromkollektor (2r) und/oder ein Abstand zwischen der Kathode (2c) und dem Anodenstromkollektor 1,0 mm oder mehr und 6,0 mm oder weniger beträgt, die Dichte des leitfähigen elastischen Körpers (2e) 0,1 g/cm$^3$ oder mehr und 4,5 g/cm$^3$ oder weniger beträgt, und die Flächenpressung, die zwischen der Membran (4) und der Anode (2a) und/oder der Kathode (2c) anliegt, 8 kN/m$^2$ oder mehr und 100 kN/m$^2$ oder weniger in der Null-Lücke-Struktur Z beträgt.

**7.** Elektrolyseur (50) nach Anspruch 6, wobei der leitfähige elastische Körper (2e) einen Drahtdurchmesser von 0,1 mm oder mehr und 0,5 mm oder weniger aufweist.

8. Elektrolyseur (50) nach Anspruch 6 oder 7, wobei die Membran (4) eine durchschnittliche Wasserpermeationsporengröße von 0,01 $\mu$m oder mehr und 1,0 $\mu$m oder weniger aufweist, und/oder

   wobei die Membran (4) eine Dicke von 100 $\mu$m oder mehr und 600 $\mu$m oder weniger aufweist, und/oder
   wobei die Membran (4) ein Oberflächenöffnungsverhältnis von 30% oder mehr und 70% oder weniger aufweist.

9. Elektrolyseur (50) nach einem der Ansprüche 6-8, bei dem eine Vielzahl von Rippen (6) zur Befestigung der Kathode (2c) und der Anode (2a) angebracht sind, wobei der Abstand der Rippen (6) 50 mm oder mehr und 150 mm oder weniger beträgt.

10. Elektrolyseur (50) nach einem der Ansprüche 6-9, wobei die Fläche S1 einer stromführenden Oberfläche des Elements (60) 0,1 m$^2$ oder mehr und 10 m$^2$ oder weniger beträgt.

11. Elektrolyseur (50) nach einem der Ansprüche 6-10, wobei die Dicke "d" des Elements 10 mm oder mehr und 100 mm oder weniger beträgt.

12. Elektrolyseur (50) nach einem der Ansprüche 6-11, wobei der Elektrolyseur (50) 50 oder mehr und 500 oder weniger Elektrolysezellen aufweist.

13. Elektrolysevorrichtung (70), umfassend:

   den Elektrolyseur (50) nach einem der Ansprüche 1-12;
   eine Schlauchpumpe (71), die so konfiguriert ist, dass sie einen Elektrolyten umwälzt;
   einen Gas-Flüssig-Trennbehälter (72), der so konfiguriert ist, dass er Wasserstoff und/oder Sauerstoff aus dem Elektrolyten abtrennt; und
   einen Wassernachfüller (73), der zum Nachfüllen von Wasser konfiguriert ist.

14. Wasserelektrolyseverfahren, umfassend:
   Durchführen einer Elektrolyse unter Verwendung der Elektrolysevorrichtung (70) nach Anspruch 13 durch Umwälzen eines Elektrolyten, so dass die Reynoldszahl des Elektrolyten, berechnet nach der folgenden Formel (1), 10 bis 1800 beträgt:

$$\text{Formel (1): Re} = Q / (\text{Anzahl der Strömungsgleichrichter (6) pro Elektrodenfach (5)} + 1) \times \{(2 \times D) / (B + C)\} / (\nu \times D),$$

   wobei Q die Durchflussrate (m$^3$/Sekunde) des Elektrolyten pro Elektrodenkammer (5) und $\nu$ die kinematische Viskosität (m$^2$/Sekunde) des Elektrolyten ist.

15. Wasserelektrolyseverfahren nach Anspruch 14, wobei die Temperatur des Elektrolyten im Elektrolyseur (50) 80 °C bis 130 °C beträgt.

16. Wasserstoffherstellungsverfahren zum Herstellen von Wasserstoff durch Elektrolyse von alkalihaltigem Wasser in einem Elektrolyseur (50) nach einem der Ansprüche 1-12.


**Revendications**

1. Électrolyseur (50), comprenant :

   une pluralité d'éléments (60) se chevauchant mutuellement avec une membrane (4) intercalée entre ceux-ci, chaque élément comprenant une anode (2a), une cathode (2c), une paroi de séparation (1) séparant l'anode (2a) de la cathode (2c), et un cadre externe (3) bordant la paroi de séparation (1), la membrane (4) étant en contact avec l'anode (2a) et la cathode (2c) pour former une structure à espacement nul (Z) ; et
   une pluralité de rectificateurs d'écoulement (6) qui sont agencés de façon à être mutuellement parallèles dans des compartiments d'électrode (5) de façon à être parallèles à une direction donnée le long de la paroi de séparation (1), chaque compartiment d'électrode (5) étant défini par la paroi de séparation (1), le cadre externe (3) et la membrane (4),

dans lequel la longueur A du compartiment d'électrode (5) dans la direction donnée est de 0,40 m ou plus et 4,0 m ou moins, la longueur B du compartiment d'électrode (5) dans la direction orthogonale à la paroi de séparation (1) est de 0,0030 m ou plus et 0,030 m ou moins, et l'intervalle C entre la pluralité de rectificateurs d'écoulement (6) est de 0,050 m ou plus et 0,1 m ou moins, et

dans lequel l'aire de section transversale D du compartiment d'électrode (5) sur le plan orthogonal à la direction donnée est de 0,00050 m² ou plus et 0,0050 m² ou moins, et la valeur de $\{(2 \times D)/(B + C)\}$ est de 0,015 m ou plus et 0,050 m ou moins.

2. Électrolyseur (50) selon la revendication 1, dans lequel au moins une partie des rectificateurs d'écoulement (6) sont conducteurs, et chaque rectificateur d'écoulement (6) est physiquement et électriquement connecté à l'électrode correspondante.

3. Électrolyseur (50) selon l'une quelconque des revendications 1 ou 2, dans lequel un joint (7) comportant la membrane (4) est intercalé entre des cadres externes (3) d'éléments adjacents (60), le joint (7) ayant une épaisseur de 3,0 mm à 10 mm, et un module d'élasticité à 100 % de déformation de 1,0 MPa à 10 MPa.

4. Électrolyseur (50) selon l'une quelconque des revendications 1 à 3, dans lequel un corps élastique conducteur (2e) et un collecteur de courant sont disposés entre l'anode (2a) ou la cathode (2c) et la paroi de séparation (1) de sorte que le corps élastique conducteur (2e) est intercalé entre l'anode (2a) ou la cathode (2c) et le collecteur de courant.

5. Électrolyseur (50) selon la revendication 4, dans lequel le corps élastique conducteur (2e) est un tapis de coussin constitué de nickel.

6. Électrolyseur (50) selon l'une quelconque des revendications 1 à 5, dans lequel la pluralité d'éléments (60) comprennent chacun l'anode (2a) et la cathode (2c), se chevauchent mutuellement avec la membrane (4) intercalée entre ceux-ci, la membrane (4) étant une membrane poreuse,

l'électrolyseur (50) comprend un complexe de cathode comprenant la cathode (2c) et un corps élastique conducteur (2e) et un collecteur de cathode (2r) disposé sur un côté de la cathode (2c) opposé à la membrane (4), et/ou un complexe d'anode comprenant l'anode (2a) et un corps élastique conducteur (2e) et un collecteur d'anode disposé sur un côté de l'anode (2a) opposé à la membrane (4),

la distance entre l'anode (2a) et le collecteur de courant de cathode (2r) et/ou une distance entre la cathode (2c) et le collecteur de courant d'anode sont de 1,0 mm ou plus et 6,0 mm ou moins,

la masse volumique du corps élastique conducteur (2e) est de 0,1 g/cm³ ou plus et 4,5 g/cm³ ou moins, et

la pression superficielle étant appliquée entre la membrane (4) et l'anode (2a) et/ou la cathode (2c) est de 8 kN/m² ou plus et 100 kN/m² ou moins dans la structure à espacement nul Z.

7. Électrolyseur (50) selon la revendication 6, dans lequel le corps élastique conducteur (2e) a un diamètre de fil de 0,1 mm ou plus et 0,5 mm ou moins.

8. Électrolyseur (50) selon la revendication 6 ou 7, dans lequel la membrane (4) a une taille de pore de perméation d'eau moyenne de 0,01 $\mu$m ou plus et 1,0 $\mu$m ou moins, et/ou dans lequel la membrane (4) a une épaisseur de 100 $\mu$m ou plus et 600 $\mu$m ou moins, et/ou dans lequel la membrane (4) a un rapport d'ouverture de surface de 30 % ou plus et 70 % ou moins.

9. Électrolyseur (50) selon l'une quelconque des revendications 6 à 8, dans lequel une pluralité de nervures (6) pour fixer la cathode (2c) et l'anode (2a) sont fixées, le pas des nervures (6) étant de 50 mm ou plus et 150 mm ou moins.

10. Électrolyseur (50) selon l'une quelconque des revendications 6 à 9, dans lequel l'aire S1 d'une surface de transport de courant de l'élément (60) est de 0,1 m² ou plus et 10 m² ou moins.

11. Électrolyseur (50) selon l'une quelconque des revendications 6 à 10, dans lequel l'épaisseur « d » de l'élément est de 10 mm ou plus et 100 mm ou moins.

12. Électrolyseur (50) selon l'une quelconque des revendications 6 à 11, l'électrolyseur (50) ayant 50 ou plus et 500 ou moins des cellules d'électrolyse.

**13.** Dispositif d'électrolyse (70) comprenant :

l'électrolyseur (50) selon l'une quelconque des revendications 1 à 12 ;
une pompe tubulaire (71) configurée pour faire circuler un électrolyte ;
une cuve de séparation gaz-liquide (72) configurée pour séparer l'hydrogène et/ou l'oxygène de l'électrolyte ; et
un dispositif de réapprovisionnement d'eau (73) configuré pour réapprovisionner en eau.

**14.** Procédé d'électrolyse d'eau comprenant :
la conduite d'une électrolyse au moyen du dispositif d'électrolyse (70) selon la revendication 13 par circulation d'un électrolyte de sorte que le nombre de Reynolds de l'électrolyte calculé à partir de la formule (1) suivante est de 10 à 1800 :

$$\text{Formule (1) : Re} = Q \, / \, (\text{le nombre de rectificateurs d'écoulement (6)}$$

$$\text{par compartiment d'électrode (5)} + 1) \times \{(2 \times D) \, / \, (B + C)\} \, / \, (v \times D),$$

où $Q$ est le débit ($m^3$/seconde) de l'électrolyte par compartiment d'électrode (5), et $v$ est la viscosité cinématique ($m^2$/seconde) de l'électrolyte.

**15.** Procédé d'électrolyse d'eau selon la revendication 14, dans lequel la température de l'électrolyte dans l'électrolyseur (50) est de 80 °C à 130 °C.

**16.** Procédé de production d'hydrogène de production d'hydrogène par électrolyse d'eau contenant un alcali dans l'électrolyseur (50) tel que défini dans l'une quelconque des revendications 1 à 12.

FIG. 1

# FIG. 2

# FIG. 3

# FIG. 4

# FIG. 5

EP 3 575 439 B1

# FIG. 6

55

# FIG. 7

# FIG. 8

# FIG. 9A

Model electrolyzer

# FIG. 9B

Acrylic plate

# FIG. 9C

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4530743 B
- JP S59173281 A
- WO 2013191140 A
- WO 2014178317 A
- JP 2014009385 A
- JP S5168477 A
- JP 2016094650 A

**Non-patent literature cited in the description**

- **DETLEF STOLTEN et al.** Hydrogen Energy, in Hydrogen and fuel cells: fundamentals, technologies and applications. Wiley-VCH Verlag GmbH & Co. KGaA, 2010, 254-257